# EUROPEAN PATENT SPECIFICATION

(11) **EP 3 268 308 B1**
(45) Date of publication and mention of the grant of the patent: **23.10.2019**
(21) Application number: 16719489.3
(22) Date of filing: 10.03.2016
(51) Int. Cl.: C01B 3/38, C10L 3/08, C10L 9/08, C10J 3/48, C10J 3/62, C10J 3/72

(54) **METHOD AND SYSTEM FOR THE MANUFACTURE OF METHANE, HEAT AND ELECTRICITY BY HYDROGASIFICATION OF BIOMASS**
VERFAHREN UND SYSTEM ZUR HERSTELLUNG VON METHAN, WÄRME UND ENERGIE DURCH HYDRIERENDE VERGASUNG VON BIOMASSE
PROCÉDÉ ET SYSTÈME DE PRODUCTION DE MÉTHANE, DE CHALEUR ET D'ÉLECTRICITÉ PAR HYDROGAZÉIFICATION DE BIOMASSE

(30) Priority: 12.03.2015 PL 41156015
(43) Date of publication of application: 17.01.2018
(73) Proprietor: BICARBO Sp.z o.o., 00-131 Warsaw (PL)
(72) Inventor: KRYLOWICZ, Adam, 22-400 Zamosc (PL); KRYLOWICZ, Jaroslaw, 04-869 Warszawa (PL)
(74) Representative: Belz, Anna
(86) International application number: PCT/IB2016/051373
(87) International publication number: WO 2016/142903

(56) References cited:
- US-A1- 2007 227 069
- US-A1- 2011 120 138
- US-A1- 2012 222 353
- US-A1- 2014 100 395
- US-A1- 2015 010 873
- MINGNV GUO ET AL: "Removal of CO2 by CaO/MgO and CaO/Ca9Al6O18 in the Presence of SO2", ENERGY & FUELS., vol. 25, no. 11, 27 September 2011 (2011-09-27), pages 5514-5520, XP055285344, WASHINGTON, DC, US. ISSN: 0887-0624, DOI: 10.1021/ef201072x

## Description

The subject of the present invention is a method according to claim 1 and a system according to claim 14 for the manufacture of bio-methane and eco-methane by hydrogasification of bio-carbon and fossil carbon where the gasificating means is bio-hydrogen, as well as for the manufacture of electricity and heat.

Bio-methane is a product of hydrogasification of bio-carbon using bio-hydrogen. The product of hydrogasification of coal or lignite using bio-hydrogen is eco-methane. Bio-carbon is a product of pyrolysis of dry biomass preferably with high content of cellulose, hemicellulose and lignin. Another favourable pyrolysis product is steam and flammable gases-hereinafter referred to as the pyrolytic gas. The product of an incomplete pyrolysis of biomass at 170°C-270°C is semi-carbon which contains approximately 60%-65% elemental carbon C' with chemical properties similar to those of lignite. The product of a complete pyrolysis of biomass at more than 270°C, preferably at 300°C, is bio-carbon which contains approximately 65%-80% elemental carbon C' with chemical properties similar to those of coal or coke.

A process and apparatus for producing a synthesis gas is known from US 2007/227069 using a process of pyrolysing of biomass to carbon and a process of hydrogasification of carbon mixture to raw gas.

Document US 2012/222353 discloses A method for producing methane based on a combination of steam hydrogasification and a shift reactor where a pre-treated bopmass is mixed with coal to form a slurry before the hydrogasification.

A process for converting coal and other hydrocarbon solid fuel feedstocks is known from US 2011/120138 document, where the produced methane is cracked into hydrogen and carbon, with the hydrogen being partly recycled into the hydrogasification reactor.

A method of multistage processing of biomass to produce at least two separate fungible fuel streams, one dominated by gasoline boiling-point range liquids and the other by diesel boiling-point range liquids is known from US 2014/100395

Use of CaO/MgO as CO₂ acceptor is known from Mingnv Guo ET AL: "Removal of CO2 by CaO/MgO and CaO/Ca9Al6O18 in the presence of SO2" ENERGY & FUELS vol.25 no. 11 of 27 Sep. 2011

Use of CaO/MgO mixture in chamical looping combustion of solid fuels is known from US2015010873

Known from the book by Jerzy Szuba, Lech Michalik, entitled: "Karbochemia", "Silesia" publishing house, 1983, methods for hydrogasification using hydrogen obtained mostly by steam-and-oxygen based gasification of fine coke or coal.

Known from that book is the HYGAS method developed at the Institute of Gas Technology (USA). The HYGAS method is a process of high pressure hydrogasification of coal combined with gasification of fine coke, which makes it possible to obtain a high thermal value gas (substitute for natural gas). There are three tested versions of that process, differing in the method of producing hydrogen for hydrogasification. Hydrogen is obtained either by oxygen-steam coal gasification or electrothermal gasification or as a result of oxidation-reduction of iron oxides with gas obtained from gasification of fine coke (steam-iron system).

Known from that book is the Hydrane method developed by the Pittsburgh Energy Research Center (USA). The Hydrane method consists in obtaining a high thermal value gas by direct reaction of coal with hydrogen. Coal feedstock (any grade) reacts with hydrogen contained in a hot gas. The gasification process occurs at 815°C. Coal gasification occurs in a co-current, falling and thinned bed suspended in an internal reactor. Fine coke thus produced precipitates to
a fluidized bed in an external reactor, to undergo further reaction with hydrogen. The internal and external reactors form a single device. Hydrogen for the process is obtained in a separate reactor by steam-oxygen gasification of a part of fine coke.

Known from the patent specification US 2011/0126458A1 is a method for the production of gaseous fuel rich in methane through a combination of hydrogasification of a coal feedstock with hydrogen and steam. Gasification is carried out on an aqueous slurry of coal using hydrogen and superheated steam in a temperature range of approximately 700°C-1000°C and at a pressure of approximately 132kPa to 560kPa. The product of such gasification is hydrogen, methane, carbon monoxide and carbon dioxide. Hydrogen is separated from this mixture in a separator and recycled back to the SHR carbon gasifier also fed with steam, and a mixture of CH₄, CO and CO₂ is a fuel gas rich in methane (up to 40% of CH₄).

From the Chinese patent specification CN1608972A there is known a method for the production of hydrogen in a biomass gasification process using steam mixed with a CO₂ acceptor in the form of a mixture of calcium oxide and magnesium oxide which exhibits catalytic properties in biomass gasification. The resulting mixture of magnesium and calcium carbonates and unreacted fine coke, separated from ash in a cyclone, is fed to a carbonates calcination reactor, where it undergoes calcination by combustion of fine coke in an air stream fed at the bottom of the carbonates calcination reactor, wherefrom a regenerated CO₂ acceptor being a mixture of calcium and magnesium oxides (CaO/MgO) is recycled back to the biomass gasification reactor.

All these methane manufacturing processes feature large consumption of elemental carbon (C) - for producing two molecules of CH₄ at least 5 elemental carbon atoms (C) are consumed. This limits the efficiency of the carbon hydrogasification processes. It is characterized by high CO₂ emissions to atmosphere and an increased emission of solid waste to the environment.

The present invention solves the issue of application of plant-based raw materials from cultivated crops and organic waste and full utilisation of biomass having high content of cellulose, hemicellulose and lignin to produce bio-methane and bio-carbon, and, subsequently, bio-hydrogen for hydrogasification of bio-carbon to bio-methane and fossil carbon to eco-methane and high-efficiency conversion, exceeding 60%, of the chemical energy of the resulting fuel to electricity. These effects have been obtained by producing bio-carbon in a biomass pyrolysis process, forming a mixture of bio-carbon with fossil carbon, and gasification of said mixture using bio-hydrogen obtained using bio-methane, steam and a novel CO₂ acceptor which is regenerated using thermal energy from a power generation unit, from pyrolytic gas combustion, and using solar energy, which leads to its accumulation.

The method for the manufacture of bio-methane and eco-methane as well as electricity and thermal energy using a process of pyrolysing biomass to biocarbon mixed with comminuted and, possibly, appropriately prepared fossil carbon and using a process of hydrogasification of the carbon mixture to raw gas, its desulphurisation and separation into hydrogen and methane using a process of producing hydrogen in a reaction of methane with steam and with a CO₂ acceptor and regeneration of the acceptor and with the use of MCFC fuel cells and a gas-steam power and heat plant to produce electricity and heat, **is characterized in that** a comminuted dry plant-based material or a waste-based raw material is subjected, individually or in specified sets, to a pyrolysis process, either in the temperature range of approximately 170°C-270°C at normal pressure to produce semi-carbon and a pyrolytic gas or in the temperature range of approximately 270°C-300°C to produce bio-carbon and a pyrolytic gas or in the temperature range higher than 300°C, with a part of the pyrolytic gas directed to carry out pyrolysis of biomass in a biomass pyrolysis apparatus, and the other part of pyrolytic gas is directed to pre-heat the regenerating stream of CO₂ in the preheater. The resulting semi-carbon, containing around 60%-65% of elemental carbon, is mixed preferably with comminuted lignite, while bio-carbon containing approximately 65%-80% of elemental carbon is mixed with comminuted coal in a ratio of elemental carbon C' from bio-carbon to elemental carbon C from fossil carbon preferably being C': C = 1 : 1. This mixture is fed to a first low-pressure or highpressure hydrogasification reactor where a process of complete hydrogasification is carried out using bio-hydrogen to produce raw gas and ash, or a process of incomplete hydrogasification to produce raw gas and fine coke. The fine coke is partly discharged to a fine coke storage facility and partly fed to pre-heat the CO₂ regenerating stream in the preheater and burned. The raw gas obtained is fed to a process of separating vapours and gases, where it is dried and subjected to desulphurisation, and then separated into hydrogen, residual gases, and a methane mixture consisting of pure bio-methane and eco-methane. A part of the methane, after cooling down in a heat exchanger, is directed to supply a power generation unit, from which heat is fed to a heat exchanger to heat a regenerating CO₂ stream and to a heat exchanger in the waste heat boiler that produces process steam and power steam, and the other part of the cooled down methane is fed either to a compressor or to a condenser or introduced to a gas distribution pipeline. Hot bio-methane at a temperature approximately 800°C is fed to a third bio-hydrogen generation reactor where, in a reaction of bio-methane with hot steam supplied from the waste heat boiler and with the use of a CO₂ acceptor bio-hydrogen is produced which, after cooling down, is directed to the process of hydrogasification of a carbon mixture in the first reactor, while spent CO₂ acceptor in the form of a mixture of carbonates of magnesium and calcium is directed to a second reactor for calcination using hot regenerating CO₂ stream. The regenerated CO₂ acceptor in the form of magnesium oxide and calcium oxide is fed to the third reactor, and the CO₂ stream at a temperature of approximately 400°C leaving the second reactor is supplied in a first part to the heat exchanger in the waste heat boiler where it is cooled down. After cooling, it is directed either to a known CO₂ sequestration process, or to compression and solidification of CO₂ to form dry ice, or discharged to the atmosphere. The other part, as the regenerating CO₂ stream, is heated to a temperature of about 700°C needed for the calcination of magnesium carbonate, or to a temperature of about 1000-1100°C needed for the calcination of a mixture of magnesium and calcium carbonates, and also in a preheater supplied periodically with a hot heat carrier heated in a solar collector to a temperature of 1100-1200°C, and the regenerating CO₂ stream so heated is fed to a second reactor.

A comminuted dry mixture of semi-carbon with lignite or bio-carbon with coal, after removing the air from it by using CO₂, is supplied from a carbon mixture preparation unit to the first low pressure reactor. In the first reactor, there occurs the process of hydrogasification of the carbon mixture, first in the internal chamber in a suspended bed falling in co-current with a gas introduced at the top of the internal chamber, said gas containing approximately 50% of H₂ and 50% of CH₄ at a temperature about 815°C at normal pressure. The raw gas obtained in this process is passed from the first reactor into a separator of vapours and gases, where it is cleaned from dust and admixed gases and, in particular, is subjected to desulphurisation, after which it is separated into a pure methane mixture consisting of bio-methane and eco-methane, and into pure hydrogen recycled back to the bio-hydrogen stream. A partly reacted carbon mixture is fed to an external chamber in the first reactor, where it is made to completely react with hydrogen to produce ash and hydrogen-and-methane gas, or to partially react to form fine coke and hydrogen-and-methane gas. The ash is discharged to storage and the fine coke is fed either to combustion or to a storage facility, while the hydrogen-and-methane gas is top-fed to the inner chamber of the reactor.

In the first high pressure reactor, the carbon mixture after combining with mineral oil is fed in the form of a suspension, using a spray nozzle, to the topmost section of the reactor, called the evaporation section, at a pressure of about 6.8 MPa. At the temperature prevailing there, approximately 315°C, the oil evaporates and its vapours are discharged together with a hot raw gas leaving the middle section, called the first stage of hydrogasification, to the vapour and gas separator. The separated mineral oil, then liquefied in a condenser, is recycled to the carbon suspension in oil preparation unit, and purified raw gas, especially after desulphurisation, is separated into a methane mixture and pure hydrogen combined with bio-hydrogen. Dry carbon and bio-carbon particles at a temperature of about 300°C are directed to the central section, subjected to fluidization in a stream of biohydrogen-containing gas leaving the reactor bottom section called the second stage of carbon hydrogasfication, and in the central section, at a temperature elevated to approximately 650°C and at a pressure of 6.0 MPa degassing and partial hydrogasification of carbon particles takes place. Partly reacted carbon mixture is subjected to complete hydrogasification in a fluidal bed in the bottom reactor section at a temperature of 750-950°C using bio-hydrogen fed to that section.

As the CO₂ acceptor that participates in the bio-hydrogen manufacturing process magnesium oxide is used, or, preferably, a mixture of magnesium oxide with calcium oxide at a preferable ratio MgO : CaO = 1 : 3 molar quantities of the substance needed for the reaction to produce bio-hydrogen with amount of heat around 155 kJ/mol - 165 kJ/mol of CH₄ at more than 100°C during continuous operation of the third reactor, depending, however, on the amount of heat brought into the reactor by these reactants; thus, this proportion is adjustable in the range of 1: 10 to 10: 1.

For the process of thermal decomposition of carbonates involving solar power, CO₂ acceptor and contributing energy to the bio-hydrogen generation reaction, it is preferred to use calcium oxide, whose energy of CO₂ uptake, 178.8 kJ/mol, contributed to the bio-hydrogen manufacturing process is about 45% of the energy of burning one mole of elemental carbon.

In the second shaft reactor, in a bed of carbonates of magnesium and calcium fluidised by a hot stream of CO₂ at about 1100°C, in the bottom zone of the reactor thermal decomposition of calcium carbonate is carried out in the temperature range around 1000°C-800°C, and in the upper zone of the reactor thermal decomposition of magnesium carbonate is carried out in the range of approximately 800°C-400°C, producing oxides of magnesium and calcium and carbon dioxide.

The power generation unit consumes eco-methane which is supplied to the gas turbine and a fuel cell, and the heat from the fuel cell, at a temperature of approximately 650°C, is directed to a heat exchanger to heat the regenerating CO₂ stream, and flue gas exiting the fuel cell, at a temperature of approximately 400°C, is supplied to a heat exchanger in the waste heat boiler.

Flue gases from the last stage of the gas turbine, at a temperature preferably about 700°C, are supplied to the heat exchanger to heat the regenerating CO₂ stream, and the flue gas exiting the outlet at a temperature of 400°C-600°C is fed to a heat exchanger in the waste heat boiler, wherefrom power steam at about 585°C is fed to the steam turbine of a steam turbine unit.

The waste heat boiler receives heat from the energy production unit through the approx. 400°C-600°C flue gases, heat from the approx. 400°C CO₂ stream leaving the second magnesium and/or calcium carbonates calcination reactor, heat from the approx. 500°C stream of hot bio-hydrogen and from the approx. 800°C stream of hot eco-methane produced in the first carbon hydrogasification reactor.

The regenerating CO₂ stream receives heat from a heat carrier heated up to approx. 1100-1200°C by solar energy.

The heat carrier heated by solar energy is a gas which is inert with respect to the materials used in the solar concentrators unit, preferably carbon dioxide or nitrogen or argon, or a gas with high specific heat, preferably helium, or a vapour which is inert with respect to those materials, preferably water vapour or a liquid with a high boiling point.

Bio-methane, steam and CO₂ acceptor as the reactants producing bio-hydrogen in the presence of a Ni/Al₂O₃ nickel catalyst in the range 500°C-900°C and at a pressure of 1.5 MPa - 4.5 MPa in the first part of the third reactor in the reactor tubes are additionally heated by hot CO₂ stream having temperature of about 800°C-1000°C - especially during the start-up of the third reactor.

For the bio-hydrogen producing reaction in the third reactor, of carbon monoxide and water vapour with a mixture of gases flowing in from the first part to the second part of that reactor, occurring at a lower temperature range than that in the first part, either a Cu-Zn/Al₂O₃ catalyst is used in the range of approximately 200°C-300°C or an Fe/Al₂O₃ catalyst in a higher temperature range of 350°C-500°C followed by a Cu/Al₂O₃ catalyst in the range of approx. 200°C-300°C.

Another subject of the present invention is a system for the manufacture of bio-methane and eco-methane as well as heat and electricity. The system for the manufacture of bio-methane and eco-methane as well as heat and electricity, consisting of a carbon hydrogasification reactor, a reactor for calcination of carbonates of magnesium and calcium, a reactor for the production of bio-hydrogen, a vapour-gas separator, an apparatus for biomass pyrolysis, a carbon mixture feed preparation unit, a waste heat boiler possibly connected to a CO₂ sequestration subsystem, an energy production unit, a preheater for the regenerating CO₂ stream, heat exchangers, conveyors, pumps, and pipelines for liquids, vapours and gases, **is characterized in that** the first carbon hydrogasification reactor having an inlet connected via a carbon mixture/carbon suspension conveyor to a carbon mixture/carbon suspension feed preparation unit that is connected to a biomass pyrolysis apparatus and a coal or lignite conveyor, and also the first reactor having an outlet for fine coke or ash and an outlet for raw gas from the first reactor has a connection to a vapour-gas separator which has an outlet for dusts, vapours and residual gases and a residual hydrogen outlet in the form of a pipeline connected to the bio-hydrogen outlet from a third reactor, said outlet being in the form of a pipeline connected to the first hydrogasification reactor. The vapour-gas separator also has an outlet for bio-methane and eco-methane in the form of a pipeline connected to the third bio-hydrogen production reactor and to an power generation unit. The flue gas outlet at the power generation unit, in the form of a pipeline, is, connected to the waste heat boiler which has a process steam outlet connected to the third bio-hydrogen production reactor and a power steam outlet connected to the steam turbine the power generation unit, and also a CO₂ inlet connected to a CO₂ outlet at a second carbonate calcination reactor, said reactor also having a regenerating CO₂ inlet in the form of a pipeline, said inlet connected to a preheater of that stream, and a CO₂ acceptor outlet connected via an acceptor conveyor to that acceptor's inlet at the third bio-hydrogen production reactor and the outlet of spent acceptor at the third reactor is connected via a spent acceptor conveyor to the second reactor for the calcination of spent CO₂ acceptor in the form of calcium and magnesium carbonates.

The biomass pyrolysis apparatus has a dry biomass inlet connected to a biomass conveyor and a bio-carbon outlet connected to a bio-carbon conveyor which feeds the carbon mixture preparation unit. The pyrolytic gas outlet at the biomass pyrolysis apparatus is connected to a gas burner disposed in the biomass pyrolysis apparatus and to a gas burner disposed in the regenerating CO₂ stream preheater.

The first low pressure carbon hydrogasification reactor comprises two chambers: an internal chamber for the hydrogasification of the carbon mixture and an external chamber for the hydrogasification of fine coke. It has a thermally insulated shell through which passes an inlet channel of the carbon mixture feed coming from the mixture preparation unit having a CO₂ inlet connected to a CO₂ pipeline, connected to a CO₂ pipeline for processing, and a gas outlet. The internal chamber of the first reactor has inlets for the primary gas from the external chamber and an outlet for the raw gas, and at the bottom, an outlet for partly converted carbon mixture fed to the external chamber, which also has a hydrogen inlet.

The second reactor, shaped as a shaft furnace, has at its bottom a CO₂ acceptor feeder connected via an acceptor conveyor an acceptor inlet at the third bio-hydrogen production reactor, said reactor having an outlet for spent CO₂ acceptor connected via a spent acceptor conveyor to an inlet at the second magnesium and calcium carbonates calcination reactor. The second reactor is equipped with at least one regenerating CO₂ stream nozzle located at the bottom and connected to the regenerating CO₂ stream preheater, additionally, the second reactor has at the top a CO₂ outlet connected to a CO₂ inlet at the waste heat boiler.

The preheater of the regenerating CO₂ stream is equipped with a heat exchanger, which is connected to a heat exchanger in the power generation unit, and is also equipped with a gas burner connected to the pyrolytic gas pipeline and with a pulverized fuel burner, connected to a fine coke conveyor from the first reactor and/or coal or bio-carbon conveyor. Additionally, the preheater has a heat exchanger connected to a solar collector unit through the outlet of the heat carrier to a heat exchanger placed in the focal point of each concave mirror and the inlet of that carrier. The heat exchanger in the power generation unit has at the inlet a connection to a CO₂ stream pipeline, and at the outlet a connection to the heat exchanger in the preheater. The CO₂ regenerating stream outlet at the heat exchanger in the preheater is connected to the inlet at the second carbonate calcination reactor - with a nozzle or a nozzle system located in the bottom of the reactor, said CO₂ stream outlet also having a connection to the third reactor to heat the reactor tubes. The power and heat generation unit has an electric connection to a power grid, and a connection via a heat pipeline to a heating network.

The power generation unit, consisting of a fuel cell and a gas-steam power and heat plant, is connected to the unit's collector heat exchanger, whereas the fuel cell has a heat exchanger connected via heat pipelines to the collector heat exchanger. The outlet of the fuel cell is connected via a heat pipeline to the waste heat boiler. Flue gas outlet at the methane combustion chamber is connected to the gas turbine and the gas turbine flue gas outlet is connected to a heat exchanger located in the collector heat exchanger and, further, to the waste heat boiler. The waste heat boiler is connected to the third bio-hydrogen production reactor via a process steam pipeline and to the steam turbine of the steam turbine unit via a power steam pipeline and, additionally, a CO₂ pipeline runs through the collector heat exchanger of the power generation unit, said pipeline having a heat exchanger connected to the heat exchanger in the preheater.

In addition, the waste heat boiler has an inlet for water and an inlet for CO₂ from the second carbonate calcination reactor, said inlets connected through the heat exchanger in the boiler to a CO₂ outlet for processing or discharging to the atmosphere and/or to a CO₂ outlet for sequestration and, additionally, the waste heat boiler has an inlet for the heat carrier from the hydrogen, methane and fuel cell flue gas cooling processes.

The third bio-hydrogen production reactor has internal tubes containing a nickel catalyst supported on a ceramic substrate Ni/Al₂O₃ located in the first part of the third reactor, said first part connected to a hot CO₂ stream heating these tubes, as well as tubes containing either a Cu-Zn/Al₂O₃ catalyst or an Fe/Al₂O₃ and Cu/Al₂O₃ catalyst, said tubes located in the second part of the third bio-hydrogen production reactor, whereas the third reactor has an inlet for bio-methane, an inlet for process steam and an inlet for CO₂ acceptor, as well as an outlet for magnesium and calcium carbonates and an outlet for bio-hydrogen.

The power generation unit for small objects consists of either a fuel cell and/or a co-generator.

The methane pipeline that supplies methane to the power generation unit has a connection in the form of a pipeline to either a gas distribution pipeline or a methane compressor and to a CNG tank or a methane condenser and an LNG tank.

An advantage of the method of producing bio-methane and eco-methane according to the present invention is the use of bio-carbon from biomass renewable on a yearly basis to produce bio-methane and to transfer heat to the bio-hydrogen production reaction through the new CO₂ acceptor in the form of magnesium and calcium oxides, said acceptor making it possible to control the heat, and the regeneration heat is available from the power generation unit, from pyrolytic gas combustion, and from solar energy, which allows for low consumption of elemental carbon C from fossil carbon and to convert it with steam to eco-methane - to produce one molecule of CH₄ at most one carbon atom (C) of fossil carbon is consumed. This significantly reduces CO₂ emission and carbon-related solid waste emissions into the environment. It significantly reduces the consumption of fossil carbon in the manufacture of the gaseous fuel: bio-methane or eco-methane. This fuel allows generating electricity in the power generation unit with energy efficiency exceeding 60%.

The advantage is the simultaneous hydrogasification of bio-carbon and fossil carbon in one reactor using bio-hydrogen. Hydrogasification of carbon is an exothermic process; it does not need heat to be supplied to the reaction, therefore heat exchangers in the hydrogasification reactor are not necessary. Formed in the CO₂ uptake reaction, magnesium carbonate is easily calcined at about 550°C using heat supplied from a source of electricity and heat, which greatly increases the efficiency of the system. The mixture of calcium and magnesium carbonates requires a higher calcination temperature, approx. 900°C. The appropriately higher temperature is achieved in the regenerating CO₂ stream by using a gas burner and a pulverized fuel burner. The temperature of the CO₂ stream, up to 1200°C, is achieved in the solar collector unit, thus creating a new method of using solar energy - it its accumulated in the regenerated CO₂ acceptor, especially in the calcium-based CO₂ acceptor, and then in the gaseous fuel produced, namely bio-methane and eco-methane. The efficiency of the production of electricity from solar energy is at the level of 48%. Currently, the efficiency of photovoltaic cells is approximately 15%. The pure CO₂ stream obtained in the process of calcination of the spent CO₂ acceptor is easy to incorporate in a CO₂ sequestration process, whether under the ground or by binding CO₂ to silicates to form stable products. This leads to emission-free generation of electricity using fossil carbon for this purpose.

The subject of the present invention is illustrated in an example embodiment in the drawings in which Fig. 1 shows a diagram of the technological process, which illustrates the connections between the subsystems and the equipment used in the process of producing bio-methane and eco-methane as well as heat and electricity, Fig. 2 shows a diagram of a sub-system for the manufacture of bio-methane and eco-methane using the first carbon hydrogasification reactor, Fig. 3 shows the connections of the second reactor for the calcination of magnesium carbonate or a mixture of calcium and magnesium carbonates with the waste heat boiler and with the third bio-hydrogen generation reactor and with the power and heat generation unit and with the regenerating CO₂ stream heater, Fig. 4 depicts the power generation unit combined with a high temperature fuel cell and with a gas-steam power and heat plant, Fig. 5 shows a solar collector unit connected with the regenerating CO₂ stream.

### Example I

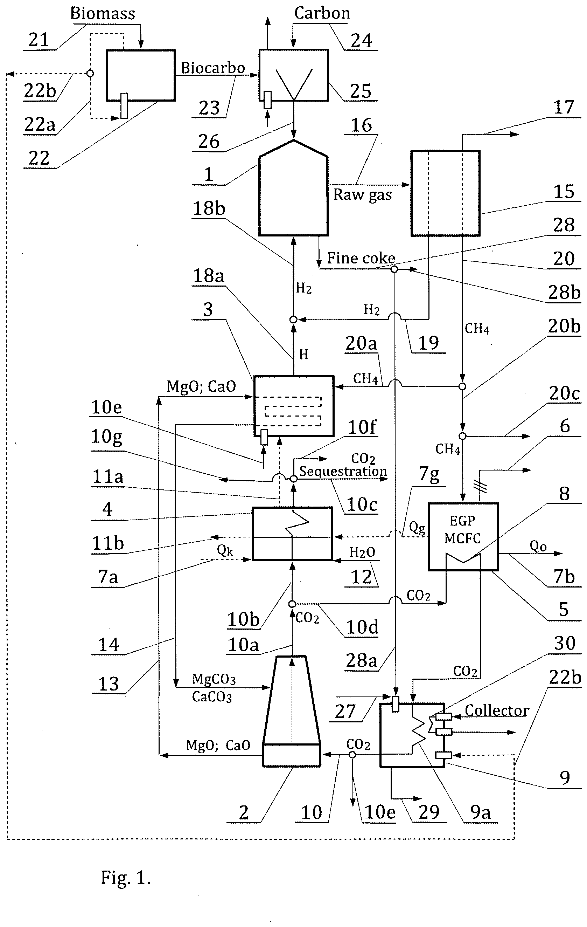

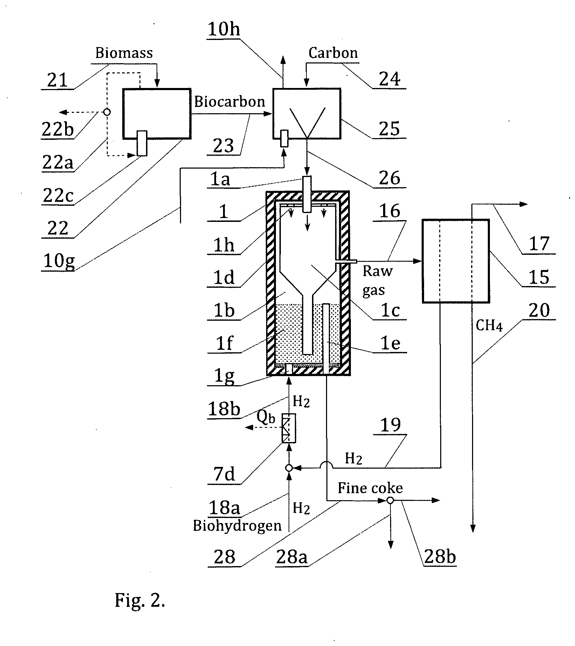

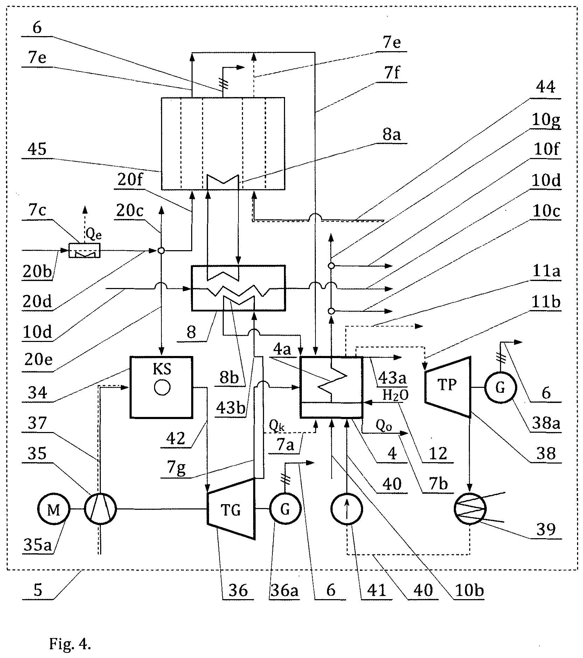

Bio-carbon with elemental carbon content C' of 77% and coal having elemental carbon content of 70-80% were fed to the bio-carbon and fossil carbon hydrogasification process, keeping pre-set bio-carbon to coal ratio of C' : C = 1 : 1. In the first bio-carbon and fossil carbon hydrogasification reactor **1** shown in Fig. 2 there is carried out a complete conversion of bio-carbon and fossil carbon using bio-hydrogen. The system for the production of bio-methane and eco-methane as well as power and thermal energy is depicted in Fig. 1, and the power generation unit is shown in Fig. 4. It is a gas-steam heat and power plant with electric power capacity Pₑₛ, coupled with a fuel cell unit with total electric power capacity P_{ew}, preferably 7% of Pes. The fuel cell unit **45** is used to start-up the system and to generate electricity for captive use. As the biomass for the full pyrolysis process carried out in a biomass pyrolysis apparatus **22** at about 300°C dry wood chips were used, fed into the apparatus **22** using a biomass conveyor **21**. The product of biomass pyrolysis is bio-carbon as well as vapours and combustible pyrolytic gas conveyed via a pipeline **22a** to a gas burner **22c** in the apparatus **22** and through a pipeline **22b** to a gas burner **9b** located in the preheater **9** of the regenerating CO₂ stream. The bio-carbon is conveyed from the apparatus **22**, using a bio-carbon conveyor **23**, to a carbon mixture preparation unit **25**, where it is mixed and appropriately comminuted together with coal fed to the unit **25** through a conveyor **24**. This mixture, without any special pre-treatment, is fed by a conveyor **26** to the top of the first carbon hydrogasification reactor **1** where it is hydrogasified to bio-methane and eco-methane at approx. 815°C by bio-hydrogen coming from the third bio-hydrogen production reactor **3**, said hydrogen being conveyed through a bio-hydrogen pipeline **18a** and, after cooling in a heat exchanger **7d** connected to a waste heat boiler **4**, fed through a pipeline **18b** to the bottom of the first reactor **1**. Bio-hydrogen, by flowing through a fluidised bed **1f** of a mixture of carbon with fine coke in the external chamber **1b** of the first reactor **1**, said chamber having a thermal insulation **1d**, causes thermal fluidisation of that bed and reacts with bio-carbon and coal to produce a reactive gas that contains about 50% hydrogen and 50% methane, said gas flowing through holes **1h** of the shell into the internal chamber **1c** and, while flowing co-currently with the falling suspended bed of the carbon mixture it react with that mixture which is fed to the internal chamber using the carbon mixture conveyor **26** from the mixture preparation unit **25** through the mixture inlet **1a** to the chamber **1c**. As a result of the reaction of the reactive gas with coal and bio-carbon in the internal chamber **1c** of the first reactor **1** there occurs a partial conversion of that mixture with bio-hydrogen, and the partially converted carbon mixture falls down to a fluidal bed **1f** in the external chamber **1b** where it is completely converted with bio-hydrogen and the resulting ash is discharged through an ash discharge channel **1e** and transported with a conveyor **28b** to an ash storage site, and the unconverted fine coke, possibly recovered on a sieve and by an air stream, is recycled back to the carbon mixture preparation unit **25**. Raw gas from the first reactor is fed via a pipeline **16** to a vapour and gas separator **15**. Raw gas (dry) has the following average composition: CH₄ approx 72% vol., H₂ approx. 15.3% vol., CO - 1.5%, CO₂ - approx. 1.6%, and other impurities, including H₂S, account for approx. 0.1%. In the gas and vapour separator **15** raw gas is desulphurised and separated on a membrane through which only hydrogen can flow, in a known way, recycled via the hydrogen pipeline **19** to the bio-hydrogen pipeline **18a**. Vapours and residual gases are removed through pipeline **17**, and the mixture of bio-methane and eco-methane flows through the pipeline **20** and is split into two equal streams - hot bio-methane fed via pipeline **20a** to the third bio-hydrogen production reactor and eco-methane fed through pipeline **20b** and cooled in the heat exchanger **7c** connected via a heat pipeline to the waste heat boiler **4**, then supplied through pipeline **20d** to feed the power generation unit 5. Surplus eco-methane is supplied through pipeline **20c** to a compressor which compresses eco-methane in a compressed eco-methane tank. The third bio-hydrogen production reactor **3** comprises tubes filled with a catalyst, i.e. nickel on a ceramic support. Hot bio-methane at a temperature of approx. 800°C is fed to these tubes through the pipeline **20a**, hot steam at a temperature of approx. 400°C is fed through the steam pipeline **11a**, and the CO₂ acceptor in the form of magnesium oxide is supplied by the CO₂ acceptor conveyor **13**. As a result of the reaction that occurs in the third reactor **3** in tubes containing nickel catalyst, the reaction of the magnesium oxide (CO₂ acceptor) with bio-methane and water vapour leads to the formation of magnesium carbonate and bio-hydrogen supplied via bio-hydrogen pipelines **18a** and **18b** and heat exchanger **7d** to the first reactor **1**, while magnesium carbonate, the spent CO₂ acceptor, is supplied by a conveyor **14** to the second MgCO₃ calcination reactor 2. The uptake of CO₂ by MgO provides about 70% of the thermal energy required for this reaction, the remaining energy being brought about by hot bio-methane at approx. 815°C and hot steam at 400°C. The heat evolving in the coal and bio-carbon hydrogasification reaction in the first reactor **1** is significantly higher than the heat needed to make up the thermal energy supplied to the bio-hydrogen production reaction. Excess heat is supplied to the waste heat boiler **4**. In addition, thermal energy, especially during the start-up of the third reactor **3**, can be supplied by a hot stream of CO₂ at a temperature of approximately 800°C supplied by a pipeline **10e** from the CO₂ stream preheater **9** and flowing around the tubes in the third reactor **3**.

The bio-hydrogen production reaction takes place at a temperature of about 500°C at appropriately increased pressure. Increasing the pressure to 3MPa results in increased reaction speed, reduces the size of the third reactor **3** and increases the MgCO₃ thermal decomposition temperature, thereby boosting the operation of the CO₂ acceptor, and decreases reaction temperature. Heat from the heat exchangers **7c** and **7d** is supplied through heat pipelines, preferably the collector pipeline **7a**, to the waste heat boiler **4,** as well as from the hot stream of regenerating CO₂ at a temperature of about 400°C supplied to the heat exchanger in the boiler by a CO₂ pipeline **10b.** Most heat is supplied to the boiler by the power generation unit **5** through flue gas pipeline **7g**. The waste heat boiler **4** is also supplied with make-up water from condensates and from an external source of water using a water pipeline **12**. The waste heat boiler **4** produces process steam at about 400°C, which is supplied through a process steam pipeline **11a** to the third bio-hydrogen production reactor **3**, and power steam at a temperature of about 585°C supplied via a power steam pipeline **11b** to the power steam turbine **38** TP in the power generation unit **5**.

The spent CO₂ acceptor in the form of magnesium carbonate is supplied from the third bio-hydrogen production reactor **3** using the spent CO₂ conveyor **14** and fed at the top of the second reactor **2**, said reactor being shaft-shaped and intended for the calcination of magnesium carbonate. The regenerated CO₂ acceptor in the form of magnesium oxide is fed from the bottom of the second reactor **2** via a feeder **2a** and a CO₂ acceptor conveyor **13** back to the third reactor **3**. The calcination of magnesium carbonate occurs at a temperature of approx. 500°C - 550°C in a falling fluidised bed inside the shaft reactor **2** using a hot stream of regenerating CO₂ at a temperature around 650°C - 700°C entering the reactor through a nozzle **2b** or a battery of nozzles located at the bottom of the second reactor **2**. This stream, while passing through the fluidised bed of magnesium carbonate, causes its thermal decomposition and the regenerated magnesium oxide drops down along the reactor onto a feeder **2a**, and the enriched CO₂ stream, cooled down at the exit of the second reactor **2** to about 400°C, enters the pipeline **10a**, and then is split into two streams of CO₂ - the first stream of regenerating CO₂ flows through pipeline **10d** to heat exchanger **8** located in the power generation unit **5** where it is heated to about 650°C by fuel cells **45** operating at a temperature of 650°C and by a part of the blowdown exhaust flue gas at approximately 700°C discharged from an extraction gas turbine **36** via a heat exchanger **8b** and is fed to the waste heat boiler 4, and then the regenerating CO₂ stream at approx. 650°C flows through a CO₂ pipeline to a regenerating CO₂ heat exchanger 9 where it is heated up to approx. 700°C by a gas burner **9b** supplied with pyrolytic gas fuel fed to the burner through the pipeline **22b** and the regenerating CO₂ stream so heated is supplied through a CO₂ pipeline **10** to the nozzle or nozzle system **2b** located at the bottom of the second magnesium carbonate calcination reactor **2**.

When necessary, the heat exchanger **7c** through which a hot stream of eco-methane flows at a temperature of approximately 800°C, gets connected via a heat pipeline to the CO₂ regenerating stream heater **9** and further to the waste heat boiler **4**. The second stream of excess CO₂ at a temperature of approximately 400°C flows through the CO₂ pipeline **10b** to the heat exchanger **4a** in the waste heat boiler heat **4** and, cooled down in the boiler, is discharged by CO₂ pipeline **10f** for utilisation. The cooled eco-methane stream flows through the pipeline **20d** to the power generation unit **5**, said unit having a connection to a power grid **6**, where it feeds the fuel cell **45** and a gas-steam power and heat plant. Hot flue gases from the fuel cell flow in pipelines **7e** through the collector pipeline **7f** to the waste heat boiler **4**. The fuel cell also comprises a heat exchanger **8a** connected to a heat exchanger in the collector heat exchanger **8** of the power generation unit **5**. It also has a connection through an inverter to the power network **6**. The cooled eco-methane stream also flows through the pipeline **20e** into a combustion chamber **34** of a gas turbine unit that consists of a first gas turbine **36** connected via a shaft to a first generator **36a** and to an air compressor **35**, said first generator **36a** having a connection to the power grid **6**. The air compressor **35** delivers air to the combustion chamber **34** through a pipeline **42**. The hot and compressed flue gases at a temperature of approx. 1200°C leave the chamber **34** and flow to the first gas turbine **36** where they expand and partially cool down to a temperature of approximately 700°C in the last stage of the turbine and the flue gases flow through the blowout flue gas pipeline **43** to the heat exchanger **8b** located in the collector heat exchanger **8** and further are sent to the waste heat boiler **4**. The expanded flue gases leaving the first turbine **36** are sent through a flue gas pipeline **7g** directly to the waste heat boiler **4**. The waste heat boiler **4** produces process steam at about 400°C, said steam being sent through steam pipeline **11a** to the third reactor **3**, and power steam at 585°C sent through steam pipeline 11b to a second steam turbine **38** coupled through a shaft to a second generator **38a**, said generator having a connection to the power grid **6**. The steam turbine **38** is connected by a cooled down steam pipeline to a condensing unit **39**, from which the resulting condensate flows through a condensate pipeline **40** to a condensate pump **41** and are pumped to the waste heat boiler **4**.

### Example II.

Bio-carbon with elemental carbon content C' of 77% was fed using bio-hydrogen to the bio-carbon hydrogasification process. In the first bio-carbon hydrogasification reactor shown in Fig. 2, a complete gasification of the bio-carbon is carried out. The power generation unit is presented in Fig. 4. It is a fuel cell being a part separated from the system shown in Fig. 4. Dry straw was used as the biomass subjected to the full pyrolysis to bio-carbon process at a temperature of about 300°C , producing about 350 kg of bio-carbon per 1 tonne of dry straw plus pyrolytic gas. Dry straw is entered using a biomass conveyor **21** to a biomass pyrolysis apparatus **22**, then the bio-carbon produced is fed to a bio-carbon preparation unit **25** where it is appropriately comminuted, and a part of the pyrolytic gas is fed via a pipeline **22a** to a gas burner **22c** in the apparatus **22**, and the other part of the pyrolytic gas is fed via a pipeline **22b** to a gas burner **9b** in the regenerating CO₂ stream preheater **9**. Appropriately comminuted in the bio-carbon preparation unit **25**, bio-carbon is fed via a bio-carbon conveyor **26** at the top of the first bio-carbon hydrogasification reactor **1** where it undergoes complete hydrogasification to bio-methane using bio-hydrogen at a temperature of approx. 815°C according to a method provided in Example I. From the first reactor **1**, raw gas is fed via a pipeline **16** to a gas and vapour separator **15**. The composition of the raw biogas is given in Example I. In the vapour and gas separator **15**, the raw gas is desulphurised and separated, preferably on a membrane through which only hydrogen flows, in a known way, recycled via pipeline **19** to the bio-hydrogen pipeline **18a**, whereas the bio-methane stream introduced to the pipeline **20** is split into two equal streams - a hot bio-methane stream supplied through a pipeline **20a** to the third bio-hydrogen production reactor **3**, and a stream of bio-methane cooled down in the heat exchanger **7c**, supplied through a pipeline **20d** to feed the power generation unit **5** in the form of a fuel cell **45.** Surplus bio-methane is supplied through pipeline **20c** to a compressor which compresses bio-methane in a compressed bio-methane tank. The production of bio-hydrogen in the third reactor **3** is carried out as shown in Example I.

The operation of the waste heat boiler **4** producing only process steam at a temperature of approximately 400°C delivered through process steam pipeline **11a** to the third bio-hydrogen production reactor **3**, and partly through pipeline **11b** for heating purposes, is carried out as described in Example I. The calcination of the spent CO₂ acceptor in the form of magnesium carbonate in the second reactor **2**, using a hot stream of regenerating CO₂ supplied through CO₂ pipeline **10d** to the heat exchanger **8** located in the fuel cell **45**, where it is heated up to a temperature of about 600°C, and then fed to the heater **9** that heats this stream, where it is heated up by the gas burner **9b** supplied with pyrolytic gas and partly with bio-methane to approximately 700°C, and then recycled via CO₂ pipeline **10** to the second MgCO₃ calcination reactor **2**, is carried out as described in Example I.

The bio-methane stream, cooled down in the heat exchanger **7c**, flows to the power generation unit **5** where it feeds the fuel cell **45**. Hot flue gases from the fuel cell flow through pipelines **7e** and further through collector pipeline **7f** to the waste heat boiler **4** where they pass heat, and then are discharged to the atmosphere. The fuel cell also comprises a heat exchanger **8a**, shown in Fig. 1 as the heat exchanger **8** in the power generation unit **5**, connected to the preheater **9** of the regenerating CO₂ stream and further to the second MgCO₃ calcination reactor. It also has a connection through an inverter to the power grid **6**.

### Example III.

Semi-carbon with elemental carbon content C' of approx. 60% and lignite with elemental carbon content C of approx. 60% were fed to the bio-carbon and fossil carbon hydrogasification process, keeping the pre-set, preferred bio-carbon to coal ratio of C' : C = 1 : 1. In the first bio-carbon and fossil carbon hydrogasification reactor **1** shown in Fig. 2 a partial gasification of the semi-carbon and lignite is carried out using bio-hydrogen, as a result of which raw gas is formed, being a mixture of unreacted hydrogen, bio-methane and eco-methane as well as other gaseous components, and also fine coke. The system for the production of bio-methane and eco-methane as well as electricity and thermal energy is depicted in Fig. 1, and the power generation unit is shown in Fig. 4. It is a gas-steam heat and power plant that is part of the power generation unit **5**. Dry wood chips were used as the biomass for the partial pyrolysis process carried out in a biomass pyrolysis apparatus **22** at about 170°C - 270°C, fed into the apparatus **22** using a biomass conveyor **21**. The product of the incomplete pyrolysis of biomass is semi-carbon as well as vapours and combustible pyrolytic gas, a part of which gas is supplied via a pipeline **22a** to a gas burner **22c** in the biomass pyrolysis apparatus **22** and the other part is supplied through a pipeline **22b** to a gas burner **9b** located in the preheater **9** of the regenerating CO₂ stream. The semi-carbon is conveyed from the biomass pyrolysis apparatus **22**, using a bio-carbon conveyor **23**, to a carbon mixture preparation unit **25**, where it is mixed and appropriately cominuted together with lignite fed to the unit **25** through a coal conveyor **24**. The carbon mixture formed is conveyed by conveyor **26** to an internal chamber **1c** of the first reactor **1**. The process of hydrogasification of the carbon mixture using bio-methane is carried out in a similar manner as in Example I. Raw gas flows through gas pipeline **16** into the vapour and gas separation vessel **15,** in which unused hydrogen is separated from the methane mixture of bio-methane and eco-methane and is recycled by hydrogen pipeline **19** to bio-hydrogen pipeline **18a**, and the methane mixture flows through the pipeline **20** which splits into a hot bio-methane pipeline supplying bio-methane to the third hydrogen production reactor **3** and into an eco-methane pipeline which supplies eco-methane to a heat exchanger **7c** where it is cooled down and the heat obtained is sent via a heat pipeline to the waste heat boiler, whereas the cooled down eco-methane flows through gas pipeline **20d** to the power generation unit **5**, and surplus eco-methane flows through pipeline **20c** to the gas distribution pipeline. Production of bio-hydrogen occurs in the third reactor **3** as a result of a reaction of bio-methane with water vapour and a CO₂ acceptor which is a mixture of magnesium oxide and calcium oxide in the ratio of 1 : 3. The energy needed for the endothermic reaction is brought about by hot bio-methane supplied to the third reactor **3** by pipeline **20a**, hot steam supplied by steam pipeline **11a**, and CO₂-uptake reactions of the CO₂ acceptor supplied to the third reactor **3** by CO₂ acceptor conveyor **13**, whereas the amount of thermal energy supplied can be controlled, inter alia, by the selection of the CaO content in the mixture of magnesium oxide and calcium oxide. The reaction of bio-hydrogen production occurs at about 500°C in the presence of a ceramic-supported nickel catalyst inside tubes **3a**, which can be heated by a hot stream of CO₂ at a temperature of 750°C, flowing around these tubes especially in the start-up phase of the third reactor **3**. The produced and cooled down bio-hydrogen is sent to the first carbon and bio-carbon hydrogasification reactor **1**. The reaction of bio-hydrogen with elemental carbon C' from the semi-carbon and with elemental carbon C from the lignite produces bio-methane and eco-methane and heat related to the carbon hydrogasification reaction. A part of that heat, from the cooling down of eco-methane in heat exchanger **7c** is supplied by a heat pipeline to the waste heat boiler **4**. Additionally, the waste heat boiler is supplied with heat from many sources: the power generation unit **5**, flue gases from gas turbine via flue gas pipeline **7g**, from cooling of bio-hydrogen in heat exchanger **7d**, and from the CO₂ stream leaving the second spent CO₂ acceptor calcination reactor **2** via pipeline **10b** to the heat exchanger **4a** in the waste heat boiler **4** and leaving the waste heat boiler **4** via CO₂ pipeline **10c** to a CO₂ sequestration facility. The waste heat boiler **4**, which receives water from the condenser **39** from an external water source **12**, produces process steam which is supplied by steam pipeline **11a** to the third reactor **3** and power steam supplied by pipeline **11b** to the second steam turbine **38** in the power generation unit **5**. The spent CO₂ acceptor from the third reactor 3, in the form of magnesium and calcium carbonates, is fed at the top of the second carbonate calcination reactor **2** by spent CO₂ acceptor conveyor **14**. Inside the second reactor **2**, a descending bed of carbonates CaCO₃ and MgCO₃ fluidised by a hot stream of regenerating CO₂ at a temperature of about 950°C undergoes thermal decomposition, with magnesium carbonate being decomposed in the upper part of this bed at about 630°C, and calcium carbonate decomposed in the lower part of this layer at a temperature of approximately 950°C. Regenerated CO₂ acceptor in the form of a mixture of magnesium and calcium oxides is supplied by CO₂ acceptor conveyor **13** to the third reactor **3**, and carbon dioxide leaving the second reactor **2** through the CO₂ pipeline **10a** at a temperature of approximately 400°C is split into two streams: the first one is fed via CO₂ pipeline **10b** to the heat exchanger **4a** in the waste heat boiler **4** and so cooled flows through CO₂ pipeline **10c** to a CO₂ sequestration process, especially based on silicates, e.g. serpentine silicate. Products of such fixation, magnesium carbonate, silica and water, are durable and easy to store. The second stream of CO₂, as a stream of regenerating CO₂, is sent by CO₂ pipeline **10d** to heat exchanger **8** in the power generation unit **5** where it is heated up by a part of the exhaust gas at a temperature of approximately 700°C that leaves the first gas turbine **36** to approximately 650°C, then the stream is directed to the preheater **9** where it is heated up to a temperature of about 1100°C by a gas burner **9b** operating on pyrolytic gas or by any other gaseous fuel, by pulverised fuel burner **27a** operating on pulverised coke, and then that stream is sent via CO₂ pipeline **10** to a nozzle system **2b** located at the bottom of the second reactor **2**.

Cooled down eco-methane is sent via pipeline **20d** to the power generation unit **5** being a gas-steam power and heat plant to combustion chamber **34** of the first gas turbine **36** in that unit. The process of generating electricity and heat has been shown in Example I.

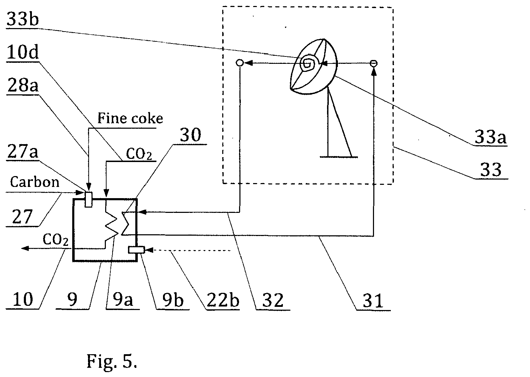

In another embodiment of the invention, the preheater **9** of the regenerating CO₂ stream is connected to a solar collector system as shown in Fig. 5. The CO₂ stream, as a heat carrier, is sent from heat exchanger **30** via pipeline **31** to a spiral heat exchanger **33b** located in the focus **33a** of a concave mirror and is recycled by a heat carrier recycle pipeline to the preheater **9**. In all such heat exchangers **33b** of the solar collector system **33**, CO₂ stream as the heat carrier is heated up to approx. 1200°C and recycled back to a heat exchanger **30** located in the preheater **9** from which heat is supplied through CO₂ pipeline **10** to the second spent CO₂ acceptor calcination reactor **2**. In this embodiment of the present invention it is preferred to use only calcium oxide as the CO₂ acceptor, which is sent to the third bio-hydrogen production reactor **3**, and the spent CO₂ acceptor in the form of calcium carbonate is recycled back to the second reactor **2**. Molar heat of thermal decomposition of CaCO₃ to CaO and CO₂, amounting to 178.8 kJ/mol, is high and represents 45.5% of the heat of combustion of 1 mole of elemental carbon C from lignite - amounting to 393.5 kJ/mol. This heat, with high efficiency up to 80%, is passed by chemical energy of the CO₂ acceptor to the chemical energy of the gas fuel that supplies the gas-steam power and heat plant, and that plant generates power with high efficiency of around 60%. Therefore, the efficiency of converting solar energy into electric energy in this system is approximately 48%, whereas the efficiency of currently used photovoltaic cells is approximately 15%. In addition, thermochemical energy is accumulated in calcium oxide and in the manufactured gas fuel, which substances can be stored, and their storage method depends on the annual sunshine time.

### Example of the device.

As shown in Fig. 1, the system consists of a first carbon and/or bio-carbon hydrogasification reactor **1**, a second carbonate calcination reactor **2**, and a third reactor **3** for the production of bio-hydrogen, a waste heat boiler **4**, a power generation unit **5** connected to a power grid **6**, heat transfer pipelines **7a** and **7b**, a collector heat exchanger **8** in the power generation unit, a preheater **9** for the regenerating CO₂ stream, CO₂ gas pipelines **10**(a, b, c, d, e, f), steam pipelines **11a** and **11b**, a water pipeline **12**, a conveyor **13** for CO₂ acceptor, a conveyor **14** for calcium and/or magnesium carbonates, a gas and steam separator **15**, a raw gas pipeline **16**, a pipeline **17** for dusts and residual gases, bio-hydrogen pipelines **18a** and **18b**, a hydrogen pipeline **19**, a bio-methane pipeline **20a** and eco-methane pipelines **20b** and **20c**, and a pyrolytic gas pipeline **22b**, a bio-carbon conveyor **23**, a fossil carbon conveyor **24,** a carbon mixture preparation unit **25**, a carbon mixture transporter **26,** fine coke conveyors **28**, **28a** and **28b**, or a carbon/bio-carbon conveyor **27**, possibly a conveyor **28b** to send ash to storage, a waste substance conveyor **29** and a heat exchanger **30** connected to a sub-system of solar collectors. The first carbon and bio-carbon hydrogasification reactor **1** is connected at the top by the carbon mixture conveyor **26** to the carbon mixture preparation unit **25** which has two connections: a connection to the lignite or coal conveyor **24** and a connection to the bio-carbon conveyor **23**, said bio-carbon conveyor **23** being connected to the biomass hydrolysis apparatus **22**. This apparatus has an inlet for dry biomass connected to the biomass conveyor **21**; it also has an outlet for bio-carbon connected to the bio-carbon conveyor **23**, as well as an outlet for combustible pyrolytic gases connected via pipeline **22a** to a gas burner in the biomass pyrolysis apparatus **22** and via pipeline **22b** to a gas burner in the regenerating CO₂ stream preheater **9**. The first reactor **1** has at its bottom a bio-hydrogen inlet connected via the bio-hydrogen pipeline 18b and further through the heat exchanger **7d** and hot bio-hydrogen pipeline **18a** to the third bio-hydrogen production reactor **3**, whereas pipeline **18a** is connected through bio-hydrogen recycle pipeline **19** to vapour and gas separator **15**. The first reactor **1** also has at its bottom an outlet for fine coke, connected using the fine coke conveyor **28** to the ground fine coke conveyor **28a** and, via a coal pulveriser mill, to the pulverised fuel burner in the regenerating CO₂ stream preheater **9**, whereas the coal pulveriser mill is also connected to the fossil carbon and bio-carbon conveyor **27** as well as, by fine coke conveyor **28b**, the fine coke outlet is connected to the fine coke storage facility, and, in case of full conversion of fine coke with bio-hydrogen, that outlet becomes the ash outlet connected via conveyor **28b** to an ash storage facility. The first reactor **1** also has a connection through the raw gas pipeline **16** to the vapour and gas separator **15**, which has at its top a discharge **17** for dust, vapours and residual gases that have been removed from the raw gas. The vapour and gas separator **15** has at its bottom a hydrogen outlet connected through the hydrogen recycle pipeline **19** to the bio-hydrogen pipeline **18a**, and it also has at its bottom an outlet connected to the methane mixture pipeline **20** which splits into hot bio-methane pipeline **20a** connected to the third bio-hydrogen reactor **3** and the hot eco-methane pipeline **20b** connected to a heat exchanger and, further, to the power generation unit **5**. The eco-methane pipeline **20d** also has a branch **20c** to receive methane. The waste heat boiler **4** has a process steam discharge connected via steam pipeline **11a** to the third bio-hydrogen production reactor **3**, as well as a power steam discharge connected via pipeline **11b** to a steam turbine in the power generation unit **5**. The third bio-hydrogen production reactor **3** also has an inlet for the CO₂ acceptor, connected via CO₂ acceptor conveyor **13** to an outlet for the regenerated CO₂ acceptor at the bottom of the second spent CO₂ acceptor calcination reactor **2**, and also the third reactor **3** has an outlet for spent CO₂ acceptor connected via spent acceptor conveyor **14** to a spent acceptor inlet at the top of the second spent acceptor calcination reactor **2**. At the inlet of the second reactor **2**, there is a CO₂ pipeline **10** connected to heat exchanger **9a** located in the regenerating CO₂ stream preheater **9**. The outlet for the CO₂ stream from the second reactor **2** is connected to the CO₂ pipeline **10a** branching out into pipeline **10b** connected to a heat exchanger in the waste heat boiler **4** and further CO₂ outlet. The waste heat boiler **4** has a connection via CO₂ pipeline **10c** to a CO2 sequestration subsystem and, via pipeline **10f**, to CO₂ processing equipment. CO₂ pipeline 10d is connected to pipeline **10a** and through the collector heat exchanger **8** located in the power generation unit **5** to heat exchanger **9a** in the regenerating CO₂ stream preheater **9** equipped with a gas burner connected via pyrolytic gas pipeline **22b** to pyrolytic gas pipeline **22a**, as well as equipped with a pulverised coal burner connected through a carbon pulveriser mill to the fine coke conveyor **28a** or the carbon/bio-carbon conveyor **27**, and also equipped with heat exchanger **30** connected to a solar collector or a collector unit.

The power generation unit **5** has an electric connection **6** to a power grid, and a connection, via heat pipeline **7b** to a municipal heat pipeline, as well as a connection via hot flue gas pipeline **7g** to the waste heat boiler **4**; additionally, the waste heat boiler **4** has a connection via water pipeline **12** to an external source of water.

Fig. 2 shows a schematic diagram of a sub-system for the production of bio-methane and eco-methane with the use of the first low pressure carbon hydro gasification reactor **1**, vapour and gas separator **15**, carbon feed preparation unit **25**, biomass pyrolysis apparatus **22**, heat exchanger **7d**, as well as conveyors and pipelines. The first carbon and bio-carbon hydrogasification reactor **1** has a thermal shell **1d,** internal reaction chamber **1c** comprising a suspended falling carbon bed, said chamber connected through carbon feed inlet **1a** to carbon feed conveyor **26**. The chamber **1c** has at its top an inlet **1h** for the reactive gas, and at the bottom a connection to an external chamber **1b** comprising a fluidised bed **1f** of the carbon feed with fine coke. Raw gas outlet is connected via a pipeline **16** to the vapour and gas separator **15**. In addition to that, chamber **1c** has a bio-hydrogen inlet **1g** connected via cooled down bio-hydrogen pipeline **18b** to heat exchanger **7d** and further by hot bio-hydrogen pipeline **18a** to the third bio-hydrogen production reactor **3**, and it also has a fine coke outlet **1e** connected to fine coke conveyor **28** which is connected to ground fine coke conveyor **28a** and the conveyor **28b** that sends the fine coke to storage, and, in case of full conversion of the carbon feed with bio-hydrogen, this will be ash outlet **1e** connected to conveyor **28b** sending the ash to storage. The heat exchanger **7d** is connected via a heat pipeline to the waste heat boiler, and bio-hydrogen pipeline **18a** is connected by the hydrogen recycle pipeline **19** to the hydrogen outlet at the vapour and gas separator **15**. This separator also has an outlet for the bio-methane and eco-methane mixture connected to the mixture pipeline **20** and a discharge for dust, vapours and residual gases connected to pipeline **17**. The first carbon and bio-carbon hydrogasification reactor **1** is connected at the top by carbon mixture feed conveyor **26** to the carbon feed preparation unit **25** which is connected to coal conveyor **24** and, by bio-carbon conveyor **23**, to the biomass pyrolysis apparatus **22**. The apparatus **22** has a connection to dry biomass conveyor **21** and is connected by the pyrolytic gas pipeline **22a** to the gas burner **22c** located in that apparatus and a connection of that pipeline by pipeline **22b** to the gas burner located in the regenerating CO₂ stream preheater.

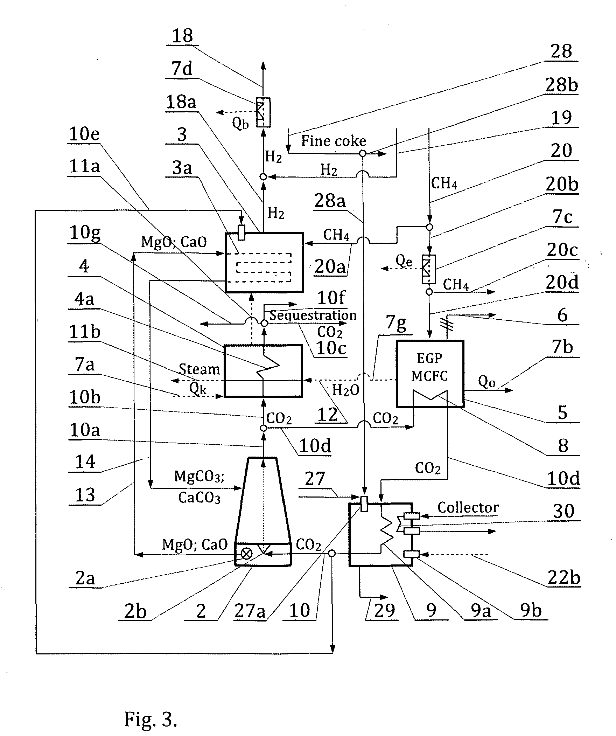

Fig. 3 depicts a schematic drawing of ties between the second reactor **2** for the calcination of magnesium carbonate or a mixture of magnesium and calcium carbonates with the waste heat boiler **4** and the third reactor **3** for the production of bio-hydrogen as well as the power generation unit **5** and the regenerating CO₂ stream preheater **9**.

The second reactor **2** for the calcination of magnesium carbonate or a mixture of magnesium and calcium carbonates is preferably built in the shape of a shaft furnace; it consists of a thermally insulated shell having at its top an inlet for spent CO₂ acceptor, connected via spent CO₂ acceptor conveyor **14** to the spent acceptor outlet at the third bio-hydrogen production reactor **3**, and having at the bottom an outlet for regenerated CO₂ acceptor in the form of magnesium oxide or a mixture of magnesium and calcium oxides, said outlet connected to a CO₂ acceptor feeder **2a** and further, via acceptor conveyor **13**, to the CO₂ acceptor inlet at the third reactor **3**. The second reactor **2** has at its bottom a CO₂ nozzle system **2b** that feeds hot regenerating CO₂ stream at a temperature of approx. 650°C - 700°C in case of thermal decomposition of MgCO₃ in the fluidised bed or approx. 1000°C - 1100°C in the case of thermal decomposition of a mixture of carbonates MgCO₃ and CaCO₃ in the fluidised bed, and at the top it has a CO₂ outlet connected to CO₂ pipeline **10a** splitting into two branches: into a branch **10b** of the CO₂ pipeline connected to heat exchanger **4a** located in the waste heat boiler **4** and, on leaving the waste heat boiler, splitting into CO₂ pipeline **10c** leading to the CO₂ sequestration sub-system and pipeline **10f**, and into a branch **10d** of the regenerating CO₂ stream pipeline connected to the collector heat exchanger **8** located in the power generation unit **5** and further connected to the heat exchanger **9a** in the regenerating CO₂ stream preheater **9** and further, through a CO₂ pipeline **10** it is connected to a nozzle system **2b**. The regenerating CO₂ stream preheater **9** additionally has a gas burner **9b** connected to pyrolytic gas pipeline **22b**, a pulverised coal burner **27a** with a fine coke/coal pulveriser mill connected to ground fine coke conveyor **28a** and to coal/bio-coal conveyor **27**, whereas the ground coke conveyor **28a** has a connection to the fine coke conveyor **28** which also has a connection to fine coke conveyor **28b** discharging to a storage facility. The CO₂ preheater **9** also has an outlet for ash, connected to waste conveyor **29**, and also has a heat exchanger **30** connected to the solar collector unit. The waste heat boiler **4** has a collective heat inlet **7a** connected to a heat exchanger **7d** for bio-hydrogen and a heat exchanger **7c** for eco-methane. It also has an inlet for condensate and make-up water, connected to water pipeline **12**, and an outlet for power steam connected via steam pipeline **11b** to a steam turbine in the power generation unit **5**, and a process steam outlet connected via steam pipeline **11a** to the third reactor **3**. The hot CO₂ stream pipeline **10** has a connection in the form of CO₂ pipeline **10e** to the third reactor **3**.

The third bio-hydrogen production reactor **3** is built inside with tubes **3a** with catalyst inside them, has a bio-hydrogen outlet connected through hot bio-hydrogen pipeline **18a** to heat exchanger **7d** and to pipeline **19** for recycled hydrogen from the vapour-gas separator. The heat exchanger **7d** is connected via a pipeline to the waste heat boiler **4**, and also, via cooled down bio-hydrogen pipeline **18b**, to the first carbon hydrogasification reactor. The hot bio-methane inlet at the third reactor **3** is connected through bio-methane pipeline **20a** to methane mixture pipeline **20** coming from the vapour-gas separator **15**, which is also connected to eco-methane pipeline **20b** connected to heat exchanger **7c** and further connected through pipeline **20c** and pipeline **20d** to the power generation unit **5**. That unit also has a connection **6** to a power grid.

Fig. 4 depicts a power generation unit **5** that consists of a high-temperature fuel cell **45** and a gas-steam power and heat plant which basically consists of a first gas turbine **36** coupled via shaft with a first generator **36a**, a second steam turbine **38** connected via shaft with a second generator **38a**, and a waste heat boiler **4**. Hot eco-methane pipeline **20b** connected through heat exchanger **7c** to cooled down eco-methane pipeline **20d** which branches out into three branches: the first branch in the form of eco-methane pipeline **20e** is connected to the combustion chamber **34** of the gas turbine unit, the second branch on the form of eco-methane pipeline **20f** is connected to the fuel cell **45**, and the third branch **20c**. Heat exchanger **7c** is connected by a heat pipeline to the waste heat boiler **4**.

The fuel cell **45** is connected to an air pipeline **44**, and the pipelines **7e** for flue gases exiting the fuel cell **45** are connected through collector pipeline **7f** to a heat exchanger in the waste heat boiler **4.** The heat exchanger **8a** located in the fuel cell **45** is connected to the collector heat exchanger **8** through pipeline **10d** with regenerating CO₂ stream preheater. The electricity outlet at the fuel cell **45** is connected by an inverter to a power grid **6**.

The combustion chamber **34** is connected at the inlet, by air pipeline **37,** to an air compressor **35** coupled via shaft with the first gas turbine **36** and a start-up engine **35a,** and at its exit the combustion chamber **34** is connected by hot flue gas pipeline **42** to the first gas turbine **36** coupled via shaft with the first generator **36a** connected to the power grid **6**, whereas the exit of the discharge flue gases from the turbine is connected by flue gas pipeline **43** to the heat exchanger **8b** located in the collector heat exchanger **8** of the power generation unit **5** and further connected to the waste heat boiler **4**, and the outlet of the expanded flue gas from the first turbine **36** is connected via flue gas pipeline **7g** to the waste heat boiler **4** which has a discharge outlet **43a** for cooled down flue gas and an inlet of the collector heat pipeline **7a.** In addition, the waste heat boiler **4** has a hot CO₂ stream inlet through CO₂ pipeline **10b** and an outlet of that pipeline branching out into CO₂ pipeline **10c** connected to the CO₂ sequestration sub-system and CO₂ pipeline **10f** connected to CO₂ pipeline **10g.**

The waste heat boiler **4** also has a process steam outlet connected via steam pipeline **11a** to the third bio-hydrogen production reactor, as well as a power steam discharge outlet connected through steam pipeline **11b** to the second steam turbine **38**, and the outlet at the second turbine **38** is connected to a condenser **39** which, in turn, via condensate pipeline **40** through condensate pump **41**, is connected to the waste heat boiler **4**. The waste heat boiler 4 also has a connection to an external water source through water pipeline **12**.

Fig. 5 shows a solar collector unit coupled with the regenerating CO₂ stream preheater. The regenerating CO₂ stream preheater **9** is equipped with an incoming CO₂ stream pipeline **10d** connected to the heat exchanger **9a** and further through the regenerating CO₂ stream pipeline **10** connected to the second spent CO₂ acceptor calcination reactor. It is also equipped with a gas burner **9b** connected to the pyrolytic gas pipeline **22b** and a pulverised coal burner **27a** with a pulveriser mill connected to the ground fine coke conveyor **28a** and/or the coal/bio-carbon conveyor **27**. Additionally, the preheater **9** is equipped with a heat exchanger **30** which at the outlet is connected via heat carrier pipeline **31** to the heat exchanger **33b** located in the focus **33a** of concave mirrors in the solar collector unit **33** and further through heat carrier pipeline **32** it is connected to the heat exchanger **30** located inside the preheater **9**.

## Claims

1. A method for the manufacture of bio-methane and eco-methane as well as electricity and thermal energy using a process of pyrolysing biomass to biocarbon mixed with comminuted and, possibly, appropriately prepared fossil carbon and using a process of hydrogasification of the carbon mixture to raw gas, its desulphurisation and separation into hydrogen and methane using a process of producing hydrogen in a reaction of methane with steam and with a CO₂ acceptor and regeneration of the acceptor and with the use of an MCFC-type fuel cell and a gas-steam power and heat plant to produce electricity and heat, **characterized in that** a comminuted dry plant-based material or a waste material is subjected, individually or in specified sets, to a pyrolysis process, either in the temperature range of approximately 170°C-270°C at normal pressure to produce semi-carbon and a pyrolytic gas, or in the temperature range of approximately 270°C-300°C to produce bio-carbon and a pyrolytic gas, or in the temperature range higher than 300°C, with a part of the pyrolytic gas directed to carry out pyrolysis of biomass in a biomass pyrolysis apparatus, and the other part of pyrolytic gas is directed to pre-heat the regenerating stream of CO₂ in the preheater, whereas the semi-carbon obtained, containing approx. 60% - 65% of elemental carbon is mixed preferably with comminuted lignite, while the bio-carbon containing approx. 65% - 80% of elemental carbon is mixed with comminuted coal at a ratio of bio-carbon based elemental carbon C' to fossil carbon-based elemental carbon preferably being C' : C = 1 : 1 and that mixture is fed to a first low- or high pressure carbon hydrogasification reactor where a full hydrogasification process is carried out using bio-hydrogen to produce raw gas and ash, or an incomplete carbon and bio-carbon hydrogasification process is carried out to produce raw gas and fine coke, said fine coke being partly discharged to a fine coke storage site and partly sent to preheat a regenerating CO₂ stream in the preheater and burned, and the raw gas obtained is supplied to a vapour and gas separation process where it is dried and subjected to desulphurisation, followed by separation into hydrogen, residual gases and a methane mixture composed of pure bio-methane and eco-methane, whereas a part of the methane after cooling down in a heat exchanger is sent to feed a power generation unit from which heat is supplied to a heat exchanger to heat the CO₂ regenerating stream and to a heat exchanger in a waste heat boiler that produces process steam and power steam, and the other part of the cooled down methane is sent either to a compressor or to a condenser or enters a gas distribution pipeline, whereas hot bio-methane at a temperature approx. 800°C enters a third bio-hydrogen production reactor where, in a reaction between bio-methane and hot steam supplied from the waste heat boiler and with a CO₂ acceptor, bio-hydrogen is produced and after cooling down is sent to the process of hydro gasification of a carbon mixture in the first reactor, whereas used CO₂ acceptor in the form of magnesium and calcium carbonates is sent to the second reactor for a calcination process using a hot stream of regenerating CO₂, after which the regenerated CO₂ acceptor in the form of magnesium oxide and calcium oxide enters the third reactor, and the CO₂ stream at a temperature of approx. 400°C leaving the second reactor is supplied in a first part to a heat exchanger in the waste heat boiler where it is cooled down and sent to either a known CO₂ sequestration process or to compression and solidification of CO₂ to dry ice, or is discharged to atmosphere, and in a second part as the regenerating CO₂ stream it is heated up to a temperature of approx. 700°C required for the calcination of magnesium carbonate or up to a temperature of 1000°C - 1100°C required for the calcination of a mixture of magnesium and calcium carbonates, as well as in a preheater periodically supplied with hot heat carrier heated in a solar collector up to a temperature of 1100°C - 1200°C and the regenerating CO₂ stream so heated is fed to the second reactor.

2. The method according to Claim 1, **characterised in that** the comminuted dry mixture of semi-carbon with lignite or bio-carbon with coal, after removing air from it using CO₂, is supplied from the carbon mixture preparation unit to the first low pressure reactor where a process of hydrogasification of the carbon mixture is carried out first in an internal chamber in a suspended bed descending co-currently with a gas fed at the top of the internal chamber, said gas containing approx. 50% H₂ and 50% CH₄ at a temperature of approx. 815°C at standard pressure, and raw gas obtained **in that** process is sent from the first reactor to a separator of vapours and gases where it is purified from dusts and admixed gases, and especially undergoes desulphurisation after which it is separated into a pure methane mixture consisting of bio-methane and eco-methane and into pure hydrogen which is recycled back to the bio-hydrogen stream, whereas the partly converted carbon mixture is sent to an external chamber of the first reactor, where it is subjected to full conversion with hydrogen to ash and a hydrogen-plus-methane gas, or subjected to partial conversion to fine coke and hydrogen-plus-methane gas, the ash being discharged to a storage site and the fine coke being sent to either combustion or storage, while the hydrogen-plus-methane gas is fed at the top of the internal chamber of the reactor.

3. The method according to Claim 1, **characterised in that** in the first high pressure reactor a carbon mixture after combining it with mineral oil is fed in the form of a suspension, using a spray nozzle, to a topmost section of the reactor, called the evaporation section, at a pressure of approx. 6.8 MPa and prevailing temperature approx.. 315°C, the oil is evaporated and its vapours are discharged along with hot raw gas leaving a middle section called the first stage of carbon hydrogasification to a vapour-gas separator where the mineral oil, recovered and subsequently condensed in a condenser, is recycled back to the carbon-in-oil suspension preparation unit, and purified raw gas, especially desulphurised, is separated into a methane mixture and pure hydrogen combined with bio-hydrogen, whereas dry carbon and bio-carbon particles at a temperature of approx. 300°C are sent to the middle section and subjected to fluidisation in a stream of biohydrogen-containing gas leaving a bottom section of the reaction, called the second stage of carbon hydrogasification, and in the middle section at a temperature raised to approx. 650°C and pressure of 6.0 MPa there occurs degassing and partial hydrogasification of carbon particles, and next, the partially converted carbon mixture is subjected to full hydrogasification in a fluidised bed in the bottom section of the reactor at a temperature 750°C - 950°C using bio-hydrogen fed to that section.

4. The method according to Claim 1 and 2 and 3, **characterised in that** as the CO₂ acceptor that participates in the bio-hydrogen production process magnesium oxide is used, or, preferably, a mixture of magnesium oxide with calcium oxide at a preferred ratio MgO : CaO = 1: 3 molar quantities of the substance, needed to supply to the reaction of bio-hydrogen formation an amount of heat around 155 kJ/mol - 165 kJ/mol CH₄ at a temperature above 100°C during continuous operation of the third reactor, depending, however, on the amount of heat brought into the reactor by these reactants; thus, this proportion is adjustable in the range of 1: 10 to 10: 1.

5. The method according to Claim 1 and 2 and 3, **characterised in that** in the process of thermal decomposition of carbonates with the use of solar energy, the CO₂ acceptor that contributes energy to the bio-hydrogen production reaction is calcium oxide.

6. The method according to Claim 4, **characterised in that** in the second shaft reactor in a bed of carbonates of magnesium and calcium fluidised by a hot stream of CO₂ at about 1100°C in the lower zone of the reactor thermal decomposition of calcium carbonate is carried out in the temperature range around 1000°C-800°C, and in the upper zone of the reactor thermal decomposition of magnesium carbonate is carried out in the range of approximately 800°C-400°C and oxides of magnesium and calcium and carbon dioxide are produced.

7. The method according to Claim 1, **characterised in that** the power generation unit consumes eco-methane which is supplied to the gas turbine and a fuel cell, and the heat from the fuel cell, at a temperature of 650°C, is directed to a heat exchanger to preheat the regenerating CO₂ stream, and flue gas exiting the fuel cell at a temperature of approximately 400°C is supplied to a heat exchanger in the waste heat boiler.

8. The method according to Claim 1, **characterised in that** flue gases from the last stage of the gas turbine, at a temperature preferably about 700°C, are supplied to the heat exchanger to heat the regenerating CO₂ stream, and the flue gas exiting the outlet at a temperature of 400°C-600°C is fed to a heat exchanger in the waste heat boiler, wherefrom power steam at about 585°C is fed to the steam turbine of a steam turbine unit.

9. The method according to Claim 1, **characterised in that** the waste heat boiler receives heat from the power generation unit through flue gases at approx. 400°C-600°C, the heat from the CO₂ stream leaving the second magnesium and/or calcium carbonates calcination reactor at approx. 400°C, the heat from the stream of hot bio-hydrogen at approx. 500°C and from the stream of hot eco-methane at approx. 800°C produced in the first carbon hydrogasification reactor.

10. The method according to Claim 8, **characterised in that** the regenerating CO₂ stream preheater receives heat from a heat carrier heated up to approx. 1100-1200°C by solar energy.

11. The method according to Claim 10, **characterised in that** the heat carrier heated by solar energy is a gas which is inert with respect to the materials used in the solar concentrator unit, preferably carbon dioxide or nitrogen or argon, or a gas with high specific heat, preferably helium, or a vapour which is inert with respect to those materials, preferably water vapour or a liquid with a high boiling point.

12. The method according to Claim 1, **characterised in that** the reactants: bio-methane, steam and CO₂ acceptor which produce bio-hydrogen in the presence of a Ni/Al₂O₃ nickel catalyst in the temperature range 500°C-900°C and at a pressure of 1.5 MPa - 4.5 MPa in the first part of the third reactor in the reactor tubes are additionally heated by the hot CO₂ stream at a temperature of about 800°C-1000°C - especially during the start-up of the third reactor.

13. The method according to Claim 1 and 12, **characterised in that** for the bio-hydrogen producing reaction in the third reactor, of carbon monoxide and water vapour with a mixture of gases flowing in from the first part to the second part of that reactor, operating in a lower temperature range than the first part, either a Cu-Zn/Al₂O₃ catalyst is used in the range of approximately 200°C-300°C or an Fe/Al₂O₃ catalyst in the higher temperature range of 350°C-500°C followed by a Cu/Al₂O₃ catalyst in the range of approx. 200°C-300°C.

14. A system for the manufacture of bio-methane and eco-methane as well as electric and thermal energy, consisting of a carbon hydrogasification reactor, a magnesium and calcium carbonates calcination reactor, a bio-hydrogen production reactor, a vapour and gas separator, a biomass pyrolysis apparatus, a carbon feed mixture preparation unit, a waste heat boiler possibly connected to a CO₂ sequestration sub-system, a power generation unit, a regenerating CO₂ stream preheater, heat exchangers, conveyors, pumps and pipelines for liquids, vapours and gases, **characterised in that** a first carbon hydrogasification reactor (**1**) having an inlet connected via a carbon mixture or slurry conveyor (**26**) to a carbon mixture/slurry preparation unit (**25**), which is connected to a biomass pyrolysis apparatus (**22**) and a coal or lignite conveyor (**24**), and, also, the first reactor having a fine coke or ash outlet (**28**), and the outlet (**16**) for the raw gas from the reactor (**1**) has a connection to a vapour and gas separator (**15**) which has a discharge outlet (**17**) for dust, vapours and residual gases and an outlet for hydrogen in the form of a pipeline (**19**) connected to a bio-hydrogen outlet from the third reactor (**3**) in the form of a pipeline (**18a**) and (**18b**) connected to the first reactor (**1**), while the vapour and gas separator (**15**) also has a bio-methane and eco-methane outlet in the form of a pipeline (**20**) connected to the third bio-hydrogen production reactor (**3**) and to the power generation unit (**5**), whereas the flue gas outlet at the power generation unit (**5**) is connected via a pipeline (**7g**) to a waste heat boiler (**4**) which has an outlet (**11a**) for process steam connected to the third reactor (**3**) and an outlet (**11b**) for power steam connected to a steam turbine in the power generation unit (**5**) as well as an inlet (**10b**) for CO₂ connected to a CO₂ outlet (**10a**) of the second reactor (**2**) which additionally has an inlet for the regenerating CO₂ stream in the form of a pipeline (**10**) connected to the preheater (**9**) of that stream and an outlet for the CO₂ acceptor connected via a conveyor (**13**) to the inlet of that acceptor at the third reactor (**3**) and the outlet for the spent CO₂ acceptor at the reactor (**3**) is connected via a conveyor (**14**) to the second reactor (**2**).

15. The system according to Claim 14, **characterised in that** the biomass pyrolysis apparatus (**22**) has an inlet for dry biomass connected to a biomass conveyor (**21**) and an outlet for bio-carbon connected to a bio-carbon conveyor (**23**) to the unit (**25**), as well as an outlet (**22a**) for combustible pyrolytic gases connected to a gas burner (**22c**) in the biomass pyrolysis apparatus (**22**) and to a gas burner (**9b**) in the regenerating CO₂ stream preheater (**9**).

16. The system according to Claim 14, **characterised in that** the first low pressure reactor (**1**) comprises two chambers: an internal chamber (**1c**) and an external chamber (**1b**), and a thermally insulated shell (**1d**) through which passes an inlet channel (**1a**) for a feed carbon mixture from the mixture preparation unit (**25**) having a CO₂ inlet connected to a CO₂ pipeline (**10g**) tied with a CO₂ pipeline for processing (**10f**) and a gas outlet (**10h**), whereas the internal chamber (**1c**) of the first reactor (**1**) has inlets for the primary gas (1h) from the external chamber and a raw gas outlet (**1b**) and at the bottom an outlet for the partly converted carbon mixture to the external chamber (**1b**) which also has a hydrogen inlet (**1g**).

17. The system according to Claim 14, **characterised in that** the second reactor (2) having a shape of a shaft furnace has at its bottom a CO₂ acceptor feeder (**2a**), said feeder connected via acceptor conveyor (**13**) to acceptor inlet at the third reactor (**3**) having an outlet for used CO₂ acceptor connected via a conveyor (**14**) to an inlet at the second reactor (**2**) which is equipped with at least one nozzle (**2b**) for the regenerating CO₂ stream, said nozzle located at the bottom and connected to the regenerating CO₂ stream preheater (**9**), and in addition, the second reactor (**2**) has at its top an outlet (**10a**) for CO₂ connected to the CO₂ inlet (**10b**) of the waste heat boiler (**4**).

18. The system according to Claim 14 and 17, **characterised in that** the CO₂ preheater (**9**) is equipped with a heat exchanger (**9a**), which is connected to a heat exchanger (**8**) situated in the power generation unit (**5**) and is equipped with a gas burner (**9b**) connected to the pyrolytic gas pipeline (**22b**) and a pulverised fuel burner (**27a**), connected to a fine coke conveyor (**28a**) and/or a coal or bio-carbon conveyor (**27**), and beside that, the preheater (**9**) has a heat exchanger (**30**) connected to a solar collector unit (**33**) through a heat carrier outlet (**31**) to a heat exchanger (**33b**) located in the focus of each concave mirror and through an inlet (**32**) of this carrier, while the heat exchanger (**8**) in the power generation unit has at the inlet a connection to a regenerating CO₂ stream pipeline (**10a**) and at the exit a connection to the heat exchanger (**9a**) in the preheater, while the regenerating CO₂ stream outlet (**10**) from the heater (**9**) is connected to the inlet of the second reactor (**2**): to a nozzle or a nozzle system, placed in the bottom of the reactor, and also the regenerating CO₂ stream outlet (**10**) has a connection (**10e**) to the third reactor (**3**) and the power generation unit (**5**) producing heat and electricity has an electrical connection to a power network (**6**), as well as a connection via a heat pipeline (**7b**) to a heat distribution network.

19. The system according to Claim 14, **characterised in that** the power generation unit (**5**) consisting of a fuel cell (**45**) and a steam & gas heat & power plant, is connected to a collector heat exchanger (**8**), whereas the fuel cell (**45**) has a heat exchanger (**8a**) connected via a heat pipeline to the collector heat exchanger (**8**), and the fuel cell flue gas outlet (**7e**) is connected by a pipeline (**7f**) to the waste heat boiler (**4**), while the flue gas outlet at the methane combustion chamber (**34**) is connected to a gas turbine (**36**) and the turbine flue gas outlet (**43b**) is connected to the heat exchanger (**8b**) located in the collector heat exchanger (**8**) and further to the waste heat boiler (**4**), which is connected to the third reactor (**3**) through a process steam pipeline (**11a**) and to a steam turbine (**38**) by a steam power pipeline (**11b**), and additionally through the heat exchanger (**8**) a CO₂ pipeline (**10d**) passes with a heat exchanger connected to the heat exchanger (**9a**) in the preheater.

20. The system according to Claim 14, **characterised in that** the waste heat boiler (**4**) has an inlet (**12**) for water and an inlet (**10b**) for CO₂ from the second reactor (**2**), said inlets connected through a heat exchanger (**4a**) in the boiler to a CO₂ outlet (**10f**) for processing, including, through an outlet (**10g**) to the unit (**25**) or to the atmosphere and/or with an outlet (**10c**) for CO₂ sequestration and, additionally, the waste heat boiler (**4**) has an inlet (**7a**) for the heat carrier from the hydrogen, methane and fuel cell flue gas cooling process.

21. The system according to Claim 14, **characterised in that** the third reactor (3) has internal tubes (**3a**) containing a nickel catalyst supported on a ceramic substrate Ni/Al₂O₃ located in the first part of the third reactor (**3**), said first part connected to an inlet (**10e**) for hot CO₂ stream, as well as tubes (**3a**) containing either a Cu-Zn/Al₂O₃ catalyst or an Fe/Al₂O₃ and Cu/Al₂O₃ catalyst, said tubes located in the second part of the third reactor (**3**), while the third reactor (**3**) has an inlet (**20a**) for bio-methane, an inlet (**11a**) for process steam and an inlet (**13**) for the CO₂ acceptor, as well as an outlet (**14**) for magnesium and calcium carbonates and an outlet (**18a**) for bio-hydrogen.

22. The system according to Claim 19, **characterised in that** the power generation unit (**5**) for small objects consists of either a fuel cell and/or a co-generator.

23. The system according to Claim 19, **characterised in that** the methane pipeline (**20b**) that supplies the power generation unit (**5**) has a connection (**20c**) in the form of a pipeline to either a gas distribution pipeline or a methane compressor and a CNG tank or a methane condenser and an LNG tank.

## Patentansprüche

1. Die Methode zur Herstellung von Biomethan und Ökomethan sowie Strom und Wärme unter Verwendung des Verfahrens der Pyrolyse der Biomasse zu Biokohle, die gegebenenfalls mit entsprechend zerkleinerter und aufbereiteter Steinkohle vermischt wird und unter Verwendung des Verfahrens der Hydrovergasung des Kohlegemisches zu Rohgas und dessen Entschwefelung und Trennung in Wasserstoff und Methan, unter Verwendung des Verfahrens der Wasserstofferzeugung bei der Reaktion von Methan mit Wasserdampf und CO₂-Akzeptor und der Akzeptorregeneration und unter Verwendung einer Brennstoffzellenanlage vom Typ MCFC und eines Gas- und Dampf-Heizkraftwerks zur Erzeugung von Strom und Wärme, **gekennzeichnet dadurch, dass** das zerkleinerte trockene Pflanzenmaterial oder Abfallmaterial entweder einzeln oder in bestimmten Mengen dem Pyrolyseprozess unterworfen wird, entweder im Temperaturbereich von 170 °C bis 270 °C unter Normaldruck zu Halbkohlenstoff und Pyrolysegas, oder im Temperaturbereich von 270 °C bis 300 °C zu Biokohlenstoff und Pyrolysegas oder im Temperaturbereich über 300 °C, wobei ein Teil des Pyrolysegases zur Durchführung der Biomassepyrolyse in der Biomassepyrolysevorrichtung geleitet wird und der zweite Teil des Pyrolysegases zur Erwärmung des CO₂-Regenerationsstroms im Erhitzer geleitet wird, während der erhaltene Halbkohlenstoff mit einem Gehalt an elementarem Kohlenstoff von etwa 60% - 65% günstig mit zerkleinerter Braunkohle vermischt wird, während der Biokohlenstoff mit einem Gehalt an elementarem Kohlenstoff von etwa 65% - 80% mit zerkleinerter Steinkohle im Verhältnis des elementarem Kohlenstoffs C' aus Biokohlenstoff zu elementarem Kohlenstoff C aus fossilem Kohlenstoff günstig von C' : C = 1 : 1 vermischt wird und das Gemisch in den ersten Nieder- oder Hochdruck Kohlevergasungsreaktor eingebracht wird, in dem entweder der vollständige Hydrobehandlungsprozess mittels Biowasserstoff zu Rohgas und Asche oder der unvollständige Hydrobehandlungsprozess von Kohle und Biokohle zu Rohgas und Koksgrus durchgeführt wird, wobei der Koksgrus teilweise zur Koksgrusdeponie geführt wird und teilweise zur Erwärmung des CO₂-Regenerationsstroms im Erhitzer geleitet und dort verbrannt wird, während das entstehende Rohgas dem Prozess der Trennung von Dämpfen und Gasen zugeführt wird, wo es getrocknet, entschwefelt und anschließend in Wasserstoff, Restgase und ein Methangemisch aus reinem Biomethan und Ökomethan getrennt wird, wobei ein Teil des Methans nach dem Abkühlen in einem Wärmetauscher der Energieerzeugungseinheit zugeführt wird, von der aus die Wärme in den Wärmetauscher zur Erwärmung des CO₂-Regenerationsstroms und in den Wärmetauscher in einem Rückgewinnungskessel zur Erzeugung von Prozess- und Energiedampf zugeführt wird und der zweite Teil des gekühlten Methans entweder dem Kompressor oder dem Kondensator oder dem Gasnetz zugeführt wird, während das heiße Biomethan mit einer Temperatur von etwa 800 °C in den dritten Reaktor zur Erzeugung von Bio-Wasserstoff eingespeist wird, in dem bei der Reaktion von Biomethan mit heißem Dampf, der aus dem Rückgewinnungskessel zugeführt wird und dem CO₂-Akzeptor der Bio-Wasserstoff erzeugt wird und nach dem Abkühlen dem Prozess der Hydrovergasung des Kohlegemisches im ersten Reaktor zugeführt wird, während der verbrauchte CO₂-Akzeptor in Form einer Mischung aus Magnesium- und Calciumcarbonaten dem zweiten Reaktor zum Kalzinierungsprozess mittels eines heißen CO₂-Regenerationsstroms zugeführt wird, dann wird der regenerierte CO₂-Akzeptor in Form von Magnesiumoxid und Calciumoxid in den dritten Reaktor eingebracht und ein CO₂-Strom mit einer Temperatur von etwa 400 °C, der den zweiten Rektor verlässt, wird im ersten Teil in den dritten Reaktor zum Wärmetauscher im Rückgewinnungskessel zugeführt, wo es gekühlt und entweder zu einem bekannten Prozess der CO₂-Sequestrierung oder zur Verdichtung und Verfestigung von CO₂ zu Trockeneis oder zur Atmosphäre geleitet wird, und im zweiten Teil als regenerativer CO₂-Strom auf die für die Kalzinierung von Magnesiumcarbonat erforderliche Temperatur von etwa 700 °C erhitzt wird, oder auf die Temperatur von etwa 1000 °C - 1100 °C, die für die Kalzinierung eines Gemisches aus Magnesium- und Calciumcarbonaten und auch in einem Erhitzer benötigt wird, der periodisch durch einen in einem Solarkollektor auf die Temperatur von 1100 °C - 1200 °C erwärmten Wärmeträger versorgt wird; der so erwärmter regenerativer CO₂-Strom wird in den zweiten Reaktor eingeleitet.

2. Die Methode nach dem Anspruch 1 **gekennzeichnet dadurch, dass** das zerkleinerte trockene Kohlenstoffgemisch aus Halbkohlenstoff mit Braunkohle oder Biokohlenstoff mit Steinkohle nach der Luftverdrängung durch CO₂ von der Vorrichtung zur Herstellung des Kohlenstoffgemisches zum ersten Niederdruckreaktor geleitet wird, wobei der Prozess der Hydrovergasung des Kohlegemisches zunächst in der Innenkammer in einem suspendierten Bett stattfindet, das gleichzeitig mit dem von oben in die Innenkammer eingeleiteten Gas, das etwa 50% H2 und 50% CH4 enthält, bei einer Temperatur von etwa 815 °C unter Normaldruck fällt, und das dabei erhaltene Rohgas vom ersten Reaktor zum Dampf- und Gasabscheider geleitet wird, wo es von Staub und Zusatzgasen gereinigt wird, und insbesondere entschwefelt wird, wonach es in ein reines Methangemisch aus Biomethan und Ökomethan und in Wasserstoff getrennt wird, der in den Bio-Wasserstoffstrom zurückgeführt wird, und ein teilweise reagiertes Kohlenstoffgemisch in eine externe Kammer im ersten Reaktor geleitet wird, wo es einer vollständigen Reaktion mit Wasserstoff zu Asche und zu Wasserstoff-Methangas oder einer unvollständigen Reaktion zu Koksgrus und zu Wasserstoff-Methangas unterworfen wird, wobei die Asche auf eine Deponie gebracht wird und der Koksgrus entweder zur Verbrennung oder zur Lagerung gebracht wird, während das Wasserstoff-Methangas von oben in die Innenkammer des Reaktors geleitet wird.

3. Die Methode nach dem Anspruch 1 **gekennzeichnet dadurch, dass** im ersten Hochdruckreaktor das Kohlegemisch in Verbindung mit Mineralöl in Form einer Suspension mittels einer Düse bei einem Druck von etwa 6,8 MPa in den obersten Abschnitt des Reaktors, den so genannten Verdampfungsabschnitt, eingebracht wird und hier bei einer Temperatur von ca. 315 °C wird das Öl verdampft und seine Dämpfe zusammen mit dem heißen Rohgas, das den Mittelabschnitt verlässt, die so genannte I Stufe der Kohlevergasung, zum Dampf- und Gasabscheider geleitet werden, wovon das abgetrennte und anschließend im Kondensator verflüssigte Mineralöl zur Vorrichtung zur Herstellung der Kohlesuspension im Öl zurückgeführt wird, und das gereinigte Rohgas, insbesondere nach der Entschwefelung, in ein Methangemisch und reinen Wasserstoff, der mit Bio-Wasserstoff kombiniert wird, getrennt wird, während die trockenen Kohlenstoff- und Biokohlenstoffteilchen bei einer Temperatur von etwa 300 °C dem Mittelabschnitt zugeführt und in einem Strom von biowasserstoffhaltigem Gas fluidisiert werden, das den unteren Abschnitt des Reaktors verlässt, der als II Stufe der Kohlevergasung bezeichnet wird und im Mittelabschnitt bei erhöhten Temperaturen bis zu etwa 650 °C und bei einem Druck von 6.0 MPa wird die Entgasung und Teilhydratisierung von Kohlepartikeln durchgeführt und dann wird das teilweise reagierte Kohlegemisch im Wirbelbett im unteren Abschnitt des Reaktors bei 750 °C - 950 °C durch den in diesen Abschnitt eingebrachten Biowasserstoff vollständig hydratisiert.

4. Die Methode nach dem Anspruch 1 und 2 und 3 **gekennzeichnet dadurch, dass** als CO₂-Akzeptor für den Bio-Wasserstoff-Produktionsprozess das Magnesiumoxid oder ein günstiges Gemisch aus Magnesiumoxid und Calciumoxid in einem günstigen Verhältnis von MgO : CaO = 1 : 3 molarer Mengen von Substanz eingesetzt wird, die für die Zuführung der Wärmemenge in die Bio-Wasserstoff-Produktionsreaktion von ca. 155 kJ/mol - 165 kJ/mol CH₄ bei einer Temperatur von über 100 °C während der kontinuierlichen Betriebs des dritten Reaktors erforderlich ist, jedoch in Abhängigkeit von der durch diese Reagenzien in den Reaktor eingebrachten Wärmemenge, wodurch dieses Verhältnis im Bereich von 1 : 10 bis 10 : 1 variiert.

5. Die Methode nach dem Anspruch 1 und 2 und 3 **gekennzeichnet dadurch, dass** bei der thermischen Zersetzung von Carbonaten unter Beteiligung von Sonnenenergie das Calciumoxid der CO₂-Akzeptor ist, der die Energie zur Reaktion der Bio-Wasserstoffproduktion liefert.

6. Die Methode nach dem Anspruch 4 **gekennzeichnet dadurch, dass** im zweiten Schachtreaktor im Bett von Magnesium und Calciumcarbonaten, das durch einen heißen CO₂-Strom bei einer Temperatur von etwa 1100 °C in der unteren Zone des Reaktors fluidisiert wird, eine thermische Zersetzung von Calciumcarbonat im Temperaturbereich von etwa 1000 °C - 800 °C und in der oberen Zone des Reaktors eine thermische Zersetzung von Magnesiumcarbonat im Temperaturbereich von etwa 800 °C - 400 °C erfolgt, wobei Magnesium- und Calciumoxide und Kohlenstoffdioxid erzeugt werden.

7. Die Methode nach dem Anspruch 1 **gekennzeichnet dadurch, dass** in der Stromerzeugungseinheit Ökomethan zum Betreiben der Gasturbine und der Brennstoffzelle verwendet wird und die Wärme von der Brennstoffzelle mit einer Temperatur von 650 °C zum Wärmetauscher zum Erwärmen des CO₂-Regenerationsstroms geleitet wird und die Abgase von der Brennstoffzelle mit einer Temperatur von 400 °C zum Wärmetauscher im Rückgewinnungskessel geleitet werden.

8. Die Methode nach dem Anspruch 1 **gekennzeichnet dadurch, dass** die Abgase des letzten Abschnitt der Gasturbine mit einer vorteilhaften Temperatur von ca. 700 °C dem Wärmetauscher zugeführt werden, um den CO₂-Regenerationsstroms zu erwärmen, und die Abgase mit einer Temperatur von 400 °C - 600 °C dem Wärmetauscher im Rückgewinnungskessel zugeführt werden, von dem aus der Energiedampf mit einer Temperatur von ca. 585 °C zur Dampfturbine des Dampfturbosatzes geleitet wird.

9. Die Methode nach dem Anspruch 1 **gekennzeichnet dadurch, dass** die Wärme von Abgasen mit einer Temperatur von etwa 400 °C - 600 °C aus dem Stromerzeugungsblock, die Wärme aus dem CO₂-Strom, der den zweiten Kalzinierungsreaktor für Magnesium- und/oder Calciumcarbonaten mit einer Temperatur von etwa 400 °C verlässt, die Wärme aus dem heißen Wasserstoff-Strom mit einer Temperatur von etwa 500 °C und aus dem heißen Strom von Ökomethan, das im ersten Kohlevergasungsreaktor in einer Temperatur von etwa 800 °C erzeugt wird, in den Rückgewinnungskessel geleitet wird.

10. Die Methode nach dem Anspruch 8 **gekennzeichnet dadurch, dass** die Wärme von einem Wärmeträger, der durch Solarenergie auf eine Temperatur von etwa 1100°C - 1200°C erwärmt wird, zum Erhitzer des CO₂-Regenerationsstroms geleitet wird.

11. Die Methode nach dem Anspruch 10 **gekennzeichnet dadurch, dass** der durch Sonnenenergie erwärmte Wärmeträger ein Gas ist, das mit Materialien des Solarkonzentratorsatzes nicht reagiert, vorzugsweise Kohlenstoffdioxid oder Stickstoff oder Argon, oder ein Gas mit hoher spezifischer Wärme, vorzugsweise Helium oder mit diesen Materialien nicht reaktiver Dampf, vorzugsweise Wasserdampf oder Flüssigkeit mit hohem Siedepunkt.

12. Die Methode nach dem Anspruch 1 **gekennzeichnet dadurch, dass** die Reagenzien - Biomethan, Wasserdampf und CO₂-Akzeptor, aus denen der Bio-Wasserstoff in Anwesenheit von Nickelkatalysator Ni/Al₂O₃ in einem Temperaturbereich von 500 °C - 900 °C und bei einem Druck von 1,5 MPa - 4,5 MPa im ersten Abschnitt des dritten Reaktors in den Reaktorrohren erzeugt wird, durch einen heißen CO₂ -Strom mit einer Temperatur von etwa 800 °C - 1000 °C - insbesondere während der Inbetriebnahme des dritten Reaktors - erwärmt werden.

13. Die Methode nach dem Anspruch 1 und 12 **gekennzeichnet dadurch, dass** im dritten Reaktor für die Reaktion zur Erzeugung des Biowasserstoffs aus Kohlenmonoxid und dem Wasserdampf mit Gasgemisch, das vom ersten Abschnitt des dritten Reaktors zum zweiten Abschnitt dieses Reaktors strömt, der im niedrigeren Temperaturbereich als der erste Abschnitt arbeitet, ein Katalysator oder Cu-Zn/Al₂O₃ im Temperaturbereich von 200 °C bis 300 °C oder bei höheren Temperaturen von 350 °C bis 500 °C ein Fe/Al₂O₃-Katalysator und dann bei Temperaturen von 200 °C bis 300 °C ein Cu/Al₂O₃-Katalysator verwendet wird.

14. Das System zur Herstellung von Biomethan und Ökomethan sowie Strom und Wärme, bestehend aus einem Kohlevergasungsreaktor, einem Kalzinierungsreaktor für Magnesium- und Calciumcarbonate, einem Reaktor zur Erzeugung von Bio-Wasserstoff, einem Dampf- und Gasverteiler, einer Biomasse-Pyrolyseeinheit, einer Aufbereitungsanlage des Kohlegemisches, einem Rückgewinnungskessel, der gegebenenfalls mit einem CO₂-Sequestrierungssubsystem kombiniert ist, einer Stromerzeugungseinheit, einem Erhitzer des CO₂-Regenerationsstroms, Wärmetauschern, Förderern, Pumpen sowie Rohrleitungen für Flüssigkeiten, Dämpfe und Gase, **gekennzeichnet dadurch, dass** der erste Kohlevergasungsreaktor **(1)** einen Eingang aufweist, der durch den Förderer **(26)** des Kohlegemisches oder der Suspension mit der Vorbereitungsvorrichtung **(25)** des Kohlegemisches oder der Suspension verbunden ist, die mit der Biomassepyrolysevorrichtung **(22)** und dem Stein- oder Braunkohleförderer **(24)** verbunden ist, und dass der erste Reaktor (**1**) über einen Ausgang **(28)** für Koksgrus oder Asche sowie einen Ausgang **(16)** für Rohgas des Reaktors **(1)** verfügt und eine Verbindung mit dem Dampf- oder Gasverteiler **(15)** aufweist, der eine Mündung **(17)** für Staub, Restdämpfe und - gase und die Wasserstoffabgabe in Form einer Rohrleitung **(19)** hat, die mit der Bio-Wasserstoffabgabe des dritten Reaktors **(3)** in Form einer Rohrleitung **(18a)** und **(18b)** mit dem ersten Reaktor **(1)** verbunden ist, wobei der Dampf- und Gastverteiler **(15)** auch einen Ausgang in Form einer Rohrleitung **(20)** für Biomethan und Ökomethan aufweist, der mit dem dritten Reaktor **(3)** zur Bio-Wasserstofferzeugung und der Stromerzeugungseinheit (5) verbunden ist, während der Rauchgasausgang von der Erzeugungseinheit (5) als Rohrleitung **(7g)** mit dem Rückgewinnungskessel **(4)** verbunden ist, der über einen Ausgang **(11a)** des Prozessdampfes zum dritten Reaktor **(3)** und einen Ausgang **(11b)** des Energiedampfes, der mit der Dampfturbine des Dampfturbosatzes **(5)** verbunden ist, sowie über den CO₂-Eingang **(10b)** verfügt, der mit dem Ausgang **(10a)** des zweiten Reaktors **(2)** verbundenen ist, der außerdem einen Eingang des CO2-Regenerationsstroms in Form einer mit dem Erhitzer **(9)** dieses Stroms verbundenen Rohrleitung **(10)** aufweist, sowie den durch den Förderer **(13)** verbundenen Ausgang des CO2-Akzeptors zum Eingang dieses Akzeptors in den dritten Reaktor **(3)** hat und der Ausgang des verbrauchten Akzeptors aus dem Reaktor **(3)** durch den Förderer **(14)** mit dem zweiten Reaktor **(2)** verbunden ist.

15. Das System nach dem Anspruch 14 **gekennzeichnet dadurch, dass** die Vorrichtung **(22)** für Biomassepyrolyse einen Eingang von trockener Biomasse, der mit dem Förderer **(21)** der Biomasse und einen Ausgang von Biokohle, der mit dem Förderer **(23)** der Biokohle zur Vorrichtung **(25)** verbunden ist, sowie einen Ausgang **(22a)** von pyrolytischen Gasen, der mit einem in der Vorrichtung **(22)** angeordneten Gasbrenner **(22c)** und einem in dem Erhitzer **(9)** des CO₂-Regenerationsstroms angeordneten Gasbrenner (**9b**) verbunden sind, aufweist.

16. Das System nach dem Anspruch 14 **gekennzeichnet dadurch, dass** der erste Niederdruckreaktor **(1)** zwei Kammern enthält - die innere Kammer (**1c**) und die äußere Kammer (**1b**) und ein wärmeisoliertes Gehäuse **(1d)** aufweist, durch das der Kanal **(1a)** des Eingangs des Kohlenstoffgemisches aus der Vorrichtung **(25)** zur Aufbereitung des Gemisches geleitet wird, die einen CO₂-Einlass, der mit der CO₂-Rohrleitung **(10g)** zur Aufbereitung verbundenen ist, sowie einen Auslass **(10h)** der Gase aufweist, während die innere Kammer **(1c)** des ersten Reaktors **(1)** Einlässe **(1h)** von Primärgas aus der äußeren Kammer und einen Auslass **(1b)** von Rohgas aufweist und im unteren Teil einen Auslass von teilweise reagiertem Kohlegemisch zur äußeren Kammer **(1b)** hat, die ebenfalls über einen Einlass **(1g)** von Wasserstoff verfügt.

17. Das System nach dem Anspruch 14 **gekennzeichnet dadurch, dass** der zweite Reaktor (2), der die Form eines Schachtofens hat, unten eine Zuführung **(2a)** des CO₂-Akzeptors aufweist und dieser über den Förderer **(13)** des Akzeptors mit dem Eingang des Akzeptors zum dritten Reaktor **(3)** verbunden ist, wobei der Ausgang des verbrauchten CO₂-Akzeptors durch den Förderer **(14)** mit dem Eingang des zweiten Reaktors **(2)** verbunden ist, der am Boden mit mindestens einer Düse **(2b)** des CO₂-Regenerationsstroms, die mit dem Erhitzer des CO₂-Regenerationsstroms verbunden ist, ausgestattet ist und darüber hinaus weist der zweite Reaktor **(2)** oben einen CO₂-Ausgang **(10a)**, der mit dem CO₂ Eingang **(10b)** in den Rückgewinnungskessel **(4)** verbunden ist, auf.

18. Das System nach dem Anspruch 14 und 17 **gekennzeichnet dadurch, dass** der CO₂-Erhitzer **(9)** mit einem Wärmetauscher **(9a)** ausgestattet ist, der mit dem in der Stromerzeugungseinheit **(5)** angeordneten Wärmetauscher **(8)** verbunden ist und mit einem Gasbrenner **(9b)**, der mit Rohrleitung des pyrolytischen Gases **(22b)** verbundenen ist, sowie mit einem Staubbrenner **(27a)**, der mit dem Förderer **(28a)** des Koksgruses und/oder dem Förderer **(27)** der Kohle oder Biokohle verbunden ist, ausgestattet ist und außerdem ist der Erhitzer **(9)** mit einem Wärmetauscher **(30)** ausgestattet, der mit einem Satz von Sonnenkollektoren **(33)** mittels einem Ausgang **(31)** des Wärmeträgermediums zum Wärmetauscher **(33b)**, der sich im Fokus jedes Hohlspiegels befindet, sowie mittels einem Eingang **(32)** dieses Mediums verbunden ist, während der Wärmetauscher **(8)** in der Stromerzeugungseinheit am Eingang mit der Rohrleitung **(10a)** des CO₂-Stromes verbunden ist und am Ausgang mit dem Wärmetauscher **(9a)** im Erhitzer verbunden ist, während der Ausgang **(10)** des CO₂-Regenerationsstroms, aus dem Erhitzer **(9)** mit dem Eingang des zweiten Reaktors **(2)** - mit der Düse oder Düseneinheit verbunden ist, die sich am Boden des Reaktors befinden und der Ausgang **(10)** des CO₂-Stroms hat eine Verbindung **(10e)** zum dritten Reaktor **(3)** und die Strom- und Wärmeerzeugungseinheit (5) ist elektrisch mit dem Stromnetz **(6)** und über eine Rohrleitung **(7b)** mit dem Fernwärmenetz verbunden.

19. Das System nach dem Anspruch 14 **gekennzeichnet dadurch, dass** die Stromerzeugungseinheit **(5)**, bestehend aus der Brennstoffzelle **(45)** und der Gas/Dampf-KWK-Anlage, mit dem Sammelwärmetauscher **(8)** verbunden ist, wobei die Brennstoffzelle **(45)** einen Wärmetauscher **(8a)** hat, der über Wärmeleitungen mit Sammelwärmetauscher **(8)** verbunden ist und der Auslass **(7e)** der Rauchgase aus der Zelle über eine Rohrleitung **(7f)** mit dem Rückgewinnungskessel **(4)** und der Rauchgasauslass aus der Methanbrennkammer **(34)** mit der Gasturbine **(36)** verbunden ist, und der Ausgang **(43b)** des Abgases aus der Gasturbine mit dem im Sammeltauscher **(8)** angeordneten Tauscher **(8b)** und weiter mit dem Rückgewinnungskessel **(4)** verbunden ist, der mit dem dritten Reaktor **(3)** über die Rohrleitung **(11a)** des Prozessdampfes und mit der Dampfturbine **(38)** über die Rohrleitung **(11b)** des Energiedampfes verbunden ist und darüber hinaus ist durch den Tauscher **(8)** die CO₂-Rohrleitung **(10d)** mit dem Tauscher geführt, der mit dem Wärmetauscher **(9a)** im Erhitzer verbunden ist.

20. Das System nach dem Anspruch 14 **gekennzeichnet dadurch, dass** der Rückgewinnungskessel **(4)** einen Eingang **(12)** für Wasser und einen Eingang **(10b)** für CO₂ aus dem zweiten Reaktor **(2)** aufweist, die über einen Wärmetauscher **(4a)** im Kessel mit einem Ausgang **(10f)** von CO₂ zur Verarbeitung verbunden ist, die über einen CO₂-Ausgang **(10g)** mit der Vorrichtung **(25)** oder in die Atmosphäre und/oder über CO₂-Ausgang **(10c)** zur Sequestrierung erfolgt und darüber hinaus hat der Rückgewinnungskessel **(4)** einen Eingang **(7a)** für den Wärmeträger aus dem Kühlprozess von Wasserstoff, Methan und Rauchgasen aus der Zelle.

21. Das System nach dem Anspruch 14 **gekennzeichnet dadurch, dass** der dritte Reaktor **(3)** im Innern Rohre **(3a)** mit einem Nickelkatalysator aufweist, der in das Keramiksubstrat Ni/Al₂O₃ eingebettet ist, die im ersten Abschnitt des dritten Reaktors **(3)** angeordnet sind, der mit dem Eingang **(10e)** des heißen CO₂-Stroms verbunden ist, sowie Rohre **(3a)**, die den Katalysator oder Cu-Zn/Al₂O₃ oder den Katalysator Fe/Al₂O₃ und Cu/Al₂O₃ enthalten und im zweiten Abschnitt des dritten Reaktors **(3)** angeordnet sind, wobei der dritte Reaktor **(3)** einen Eingang **(20a)** von Biomethan, einen Eingang **(11a)** von Prozessdampf und einen Eingang **(13)** von CO₂-Akzeptor und einen Ausgang **(14)** für Magnesium- und Calciumcarbonate und einen Ausgang **(18a)** von Biowasserstoff aufweist.

22. Das System nach dem Anspruch 19 **gekennzeichnet dadurch, dass** die Stromerzeugungseinheit **(5)** für kleine Objekte entweder aus einer Brennstoffzelle und/oder einer KWK-Kopplung besteht.

23. Das System nach dem Anspruch 19 **gekennzeichnet dadurch, dass** die Methanleitung **(20b)**, die die Stromerzeugungseinheit **(5)** versorgt, einen Anschluss **(20c)** entweder an das Gasnetz oder an den Methanverdichter und an den CNG-Tank oder an den Methanverflüssiger und LNG-Tank aufweist.

## Revendications

1. Procédé d'obtention de biométhane et d'écométhane ainsi que d'électricité et de chaleur par le procédé de pyrolyse de biomasse en biocarbone mélangé à du charbon fossile broyé et éventuellement préparé de manière appropriée et par le procédé d'hydrogazéification du mélange de carbone en gaz brut et sa désulfuration et séparation en hydrogène et méthane, en utilisant le procédé de production d'hydrogène dans la réaction du méthane avec la vapeur et l'accepteur de CO₂ et de régénération de l'accepteur, et en utilisant une pile à combustible de type MCFC et une centrale de cogénération gaz/vapeur pour produire de l'électricité et de la chaleur, **caractérisé en ce que** la matière végétale sèche broyée ou la matière résiduelle sont soumises, individuellement ou en ensembles spécifiques, au procédé de pyrolyse, soit dans une plage de température de 170°C à 270°C sous pression normale en semi-carbone et gaz pyrolytique, soit dans une plage de température de 270°C à 300°C en biocarbone et au gaz pyrolytique, soit dans une plage de températures supérieures à 300°C, où une partie du gaz pyrolytique est destinée à la pyrolyse de biomasse dans l'appareil de pyrolyse biomasse, et l'autre partie du gaz pyrolytique est destinée au chauffage du flux régénérateur du CO₂ dans un réchauffeur, tandis que le semi-carbone obtenu, contenant environ 60% à 65% de carbone élémentaire, est mélangé favorablement avec du lignite broyé, tandis que le biocarbone contenant environ 65% à 80% de carbone élémentaire est mélangé avec de la houille broyée dans le rapport du carbone élémentaire C' du biocarbone au carbone élémentaire C du carbone fossile - ce qui donne une quantité favorable à C' : C = 1 : et ce mélange est introduit dans le premier réacteur d'hydrogazéification de carbone basse ou haute pression dans lequel est effectué soit le processus complet d'hydrogazéification au moyen de biohydrogène en gaz brut et cendres, soit le processus incomplet d'hydrogazéification de carbone et biocarbone en gaz brut et cendres volantes, les cendres volantes étant partiellement évacuées à la décharge de cendres volantes, et partiellement destinées au chauffage du flux régénérateur du CO₂ et brûlées, tandis que le gaz brut qui en résulte est fourni au processus de séparation des vapeurs et des gaz, où il est séché, désulfuré et ensuite séparé en hydrogène, gaz résiduels et ensuite en mélange de méthane, composé de biométhane et d'écométhane ; après refroidissement dans un échangeur thermique, une partie du méthane est destinée à l'alimentation du système de production d'énergie, depuis laquelle la chaleur est introduite dans un échangeur thermique pour chauffer le flux régénérateur de CO₂ et dans un échangeur thermique dans une chaudière de récupération produisant de la vapeur technologique et de la vapeur énergétique, et l'autre partie du méthane refroidi est dirigée soit vers le compresseur, soit vers le condenseur, soit vers les conduites de gaz, tandis que le biométhane chaud d'une température d'environ 800°C est dirigé vers le troisième réacteur de production de biohydrogène, dans lequel, lors de la réaction du biométhane avec de la vapeur chaude fournie par une chaudière de récupération et avec un accepteur de CO₂, un biohydrogène est produit et, après refroidissement, il est dirigé vers le processus d'hydrogazéification du mélange de carbone dans le premier réacteur, tandis que l'accepteur de CO₂ usé sous forme d'un mélange de carbonates de magnésium et de calcium est dirigé vers le deuxième réacteur pour le processus de calcination par un flux régénérateur chaud de CO₂, puis l'accepteur de CO₂ régénéré sous forme d'oxyde de magnésium et d'oxyde de calcium est introduit dans le troisième réacteur, et le flux de CO₂ d'environ 400°C sortant du deuxième réacteur est fourni dans la première partie à l'échangeur thermique de la chaudière de récupération, où il est refroidi et dirigé soit vers un processus de séquestration du CO₂ connu, soit vers la compression et la solidification du CO₂ en neige carbonique, soit il est émis dans l'atmosphère, et dans la deuxième partie, en tant que flux régénérateur de CO₂, il est chauffé à une température d'environ 700°C, nécessaire à la calcination du carbonate de magnésium, soit à une température d'environ 1000°C à 1100°C, nécessaire à la calcination d'un mélange de carbonates de magnésium et de calcium, ainsi que dans un réchauffeur alimenté périodiquement par un caloporteur chauffé dans un capteur solaire à une température de 1100°C - 1200°C et le flux régénérateur de CO₂ ainsi chauffée est introduit dans le deuxième réacteur.

2. Procédé, selon la revendication 1, **caractérisé en ce que** le mélange sec broyé de carbone de semi-carbone avec du lignite ou de biocarbone avec de la houille, après en avoir éliminé l'air par CO₂, est fourni depuis l'appreil préparant le mélange de carbone au premier réacteur basse pression, dans laquelle le processus d'hydrogazéification du mélange de carbone a lieu d'abord dans la chambre intérieure dans un lit suspendu tombant à co-courant avec du gaz introduit par le haut dans la chambre intérieure, contenant environ 50% de H₂ et 50% de CH₄ à une température d'environ 815°C sous pression normale, et le gaz brut obtenu dans ce processus est dirigé du premier réacteur vers le séparateur des vapeurs et des gaz, où il est purifié de la poussière et des gaz de mélange, et en particulier il est désulfuré, ensuite il est séparé en mélange de méthane pur, composé de biométhane et d'écométhane, et en hydrogène pur renvoyé dans le flux de biohydrogène, et le mélange de carbone partiellement réagi est dirigé vers une chambre extérieure du premier réacteur, où il est entièrement mis à réagir avec de l'hydrogène en cendres et en gaz hydrogène-méthane ou partiellement mis à réagir en cendres volantes et en gaz hydrogène-méthane ; et les cendres sont envoyées à la décharge et les cendres volantes sont envoyées soit pour combustion soit pour stockage, tandis que le gaz hydrogène-méthane est envoyé par le haut vers la chambre intérieure du réacteur.

3. Procédé, selon la revendication **caractérisé en ce que** dans le réacteur haute pression, le mélange de carbone, après être combiné à de l'huile minérale, est introduit sous forme de suspension au moyen d'un vaporisateur dans la partie supérieure du réacteur, appelée section d'évaporation ; à une pression d'environ 6.8 MPa et à une température d'env. 315°C, l'huile est évaporée et ses vapeurs sont évacuées avec le gaz brut chaud sortant de la section médiane, appelée 1er degré d'hydrogazéification du carbone vers un séparateur des vapeurs et des gaz, où l'huile minérale séparée, puis liquéfiée dans le condenseur est renvoyée vers l'appareil préparant la suspension de carbone dans l'huile, et le gaz brut purifié, en particulier après désulfuration, est séparé en un mélange de méthane et en hydrogène pur combiné avec du biohydrogène, tandis que les particules sèches de carbone et de biocarbone d'une température d'environ 300°C sont dirigées vers la partie centrale et fluidisées dans un flux contenant du biohydrogène gazeux sortant de la section inférieure du réacteur, appelée le 2^{e} degré d'hydrogazéification du carbone et dans la partie centrale à température élevée à environ 650°C et sous pression de 6.0 MPa, le dégazage et l'hydrogazéification partielle des particules de carbone sont effectués, puis le mélange de carbone partiellement réagi est soumis à un hydrogazage complet dans le lit fluidisé de la section inférieure du réacteur à la température de 750°C - 950°C par le biohydrogène introduit dans cette section.

4. Procédé, selon les revendications 1 et 2 et 3, **caractérisé en ce que** comme accepteur de CO₂ prenant part au processus de production de biohydrogène est utilisé l'oxyde de magnésium ou favorablement un mélange d'oxyde de magnésium et d'oxyde de calcium dans le rapport favorable MgO : CaO = 1 : 3 quantités molaires de substances - nécessaires pour introduire dans la réaction de production de biohydrogène la quantité de chaleur d'environ 155 kJ/mol - 165 kJ/mol CH₄ à une température supérieure à 100°C pendant le fonctionnement continu du troisième réacteur, dépendant pourtant de la quantité de chaleur apportée au réacteur par ces réactifs, par conséquence cette proportion est réglée dans la plage de 1 : 10 à 10 : 1.

5. Procédé, selon les revendications 1 et 2 et 3, **caractérisé en ce que** l'oxyde de calcium est l'accepteur de CO₂ qui apporte de l'énergie à la réaction de production de biohydrogène dans le processus de décomposition thermique des carbonates avec la participation de l'énergie solaire.

6. Procédé, selon la revendication 4, **caractérisé en ce que** la décomposition thermique du carbonate de calcium est effectuée dans une plage de température d'environ 1000°C - 800°C dans le deuxième réacteur à cuve, dans le lit de carbonates de magnésium et de calcium, fluidisé par un flux chaud de CO₂ à une température d'environ 1100°C, dans la zone inférieure du réacteur, et la décomposition thermique du carbonate de magnésium dans une plage de température d'environ 800°C - 400°C, ainsi qu e la production des oxydes et des dioxyde(s) de calcium s'effectuent dans la zone supérieure du réacteur.

7. Procédé, selon la revendication 1, **caractérisé en ce que** le système de production d'énergie utilise de l'écométhane, qui alimente la turbine à gaz et la pile à combustible, tandis que la chaleur de la pile à combustible d'une température de 650°C est dirigée vers l'échangeur thermique vers le réchauffeur du flux régénérateur de CO₂, et les gaz d'échappement de la pile d'une température de 400°C sont fournis à l'échangeur thermique dans la chaudière de récupération.

8. Procédé, selon la revendication 1, **caractérisé en ce que** les gaz d'échappement du dernier degré d'une turbine à gaz d'une température favorable d'environ 700°C sont introduits dans l'échangeur thermique pour chauffer le flux régénérateur de CO₂, et les gaz d'échappement d'une température de 400°C à 600°C sont dirigés vers l'échangeur thermique dans la chaudière de récupération depuis laquelle la vapeur énergétique d'une température d'env. 585°C est dirigée vers la turbine à vapeur du système de turbine à vapeur.

9. Procédé, selon la revendication 1, **caractérisé en ce que** vers la chaudière de récupération est dirigée la chaleur du système de production d'énergie par les gaz de combustion d'une température d'environ 400°C à 600°C, la chaleur du flux de CO₂ sortant du deuxième réacteur de calcination de carbonates de magnésium et/ou de calcium d'une température d'environ 400°C, la chaleur du flux de biohydrogène chaud d'une température d'environ 500°C et du flux d'écométhane chaud produit dans le premier réacteur d'hydrogazéification du carbone d'une température d'environ 800°C.

10. Procédé, selon la revendication 8, **caractérisé en ce que** la chaleur du caloporteur chauffé à une température d'environ 1100°C - 1200°C par l'énergie solaire est dirigée vers le réchauffeur du flux régénérateur de CO₂.

11. Procédé, selon la revendication 10, **caractérisé en ce que** le caloporteur chauffé par l'énergie solaire peut être constitué par un gaz non réactif avec les matériaux du système de concentrateurs solaires, favorablement le dioxyde de carbone, l'azote ou l'argon, ou par un gaz à haute chaleur spécifique, favorablement l'hélium ou la vapeur non réactive avec ces matériaux, favorablement la vapeur d'eau ou un liquide ayant un point d'ébullition élevé.

12. Procédé, selon la revendication 1, **caractérisé en ce que** les réactifs - biométhane, vapeur et accepteur de CO₂ produisant du biohydrogène en présence d'un catalyseur au nickel Ni/Al₂O₃, à une la plage de température 500°C - 900°C et sous une pression de 1,5 MPa-4,5 MPa dans la première partie du troisième réacteur dans des tubes du réacteur, sont chauffés par un flux chaud de CO₂ d'une température de 800°C - 1000°C - en particulier lors du démarrage du troisième réacteur.

13. Procédé, selon les revendications 1 et 2, **caractérisé en ce qu'**un catalyseur ou Cu-Zn/Al₂O₃ dans une plage de 200°C-300°C ou dans une plage des températures plus élevées 350°C - 500°C au moyen d'un catalyseur Fe/Al₂O₃ et ensuite dans une place des températures de 200°C - 300°C au moyen d'un catalyseur Cu/Al₂O₃ est utilisé pour la réaction visant à produire du biohydrogène dans le troisième réacteur à partir du monoxyde de carbone et de la vapeur d'eau à partir d'un mélange de gaz circulant de la première partie du troisième réacteur vers la deuxième partie de ce réacteur, fonctionnant dans une plage de température inférieure à celle de la première partie.

14. Système de production de biométhane et d'écométhane et d'électricité et de chaleur, composé d'un réacteur d'hydrogazéification du carbone, d'un réacteur de calcination de carbonates de magnésium et de calcium, d'un réacteur de production de biohydrogène, d'un séparateur des vapeurs et des gaz, d'un appareil de pyrolyse de biomasse, d'un appareil préparant le mélange de carbone utilisé, d'une chaudière de récupération, éventuellement combinée avec un sous-système de séquestration de CO₂, d'un groupe électrogène, d'un réchauffeur du flux régénérateur de CO₂, d'échangeurs thermique, de transporteurs, de pompes et de conduites de fluides, de vapeurs et de gaz, **caractérisé en ce que** le premier réacteur **(1)** d'hydrogazéification du carbone ayant une entrée reliée par le transporteur **(26)** du mélange ou de la suspension de carbone utilisée à l'appareil de préparation **(25)** du mélange ou de la suspension de carbone utilisée, qui est relié à l'appareil de **(22)** pyrolyse de biomasse et au transporteur **(24)** de houille ou de lignite, et le premier réacteur **(1)** ayant une sortie **(28)** de cendres volantes ou cendres et une sortie **(16)** de gaz brut du réacteur **(1)** a une connexion au séparateur **(15)** des vapeurs et des gaz avec une sortie **(17)** des poussières, des vapeurs et gaz résiduels et une sortie d'hydrogène sous la forme d'une conduite **(19)** reliée à la sortie de biohydrogène du troisième réacteur **(3)** sous forme d'une conduite **(18a)** et **(18b)** reliée au premier réacteur **(1)**, tandis que le séparateur **(15)** des vapeurs et des gaz a en outre une sortie de biométhane et d'écométhane sous forme d'une conduite **(20)** reliée au troisième réacteur **(3)** de production de biohydrogène et au système **(5)** de production d'énergie, tandis que la sortie de gaz d'échappement du système **(5)** de production d'énergie sous forme d'une conduite **(7g)** est reliée à la chaudière **(4)** de récupération, qui a une sortie **(11a)** de la vapeur technologique qui est reliée au troisième réacteur **(3)** et une sortie (**11b**) de la vapeur énergétique reliée à la turbine à vapeur dans le système **(5)** de production d'énergie et une entrée **(10b)** du CO₂ reliée à la sortie **(10a)** du CO₂ du deuxième réacteur **(2)** ayant en outre une entrée du flux régénérateur CO₂ sous forme d'une conduite **(10)** reliée au réchauffeur **(9)** de ce flux et une sortie de l'accepteur de CO₂ reliée par le transporteur **(13)** à l'entrée de cet accepteur dans le troisième réacteur **(3)** et la sortie de l'accepteur usé du réacteur **(3)** relié par le transporteur **(14)** au deuxième réacteur **(2)**.

15. Système, selon la revendication 14, **caractérisé en ce que** l'appareil **(22)** de pyrolyse de biomasse a une entrée de biomasse sèche reliée à un transporteur **(21)** de biomasse et une sortie de biocarbone reliée à un transporteur **(23)** de biocarbone vers l'appareil **(25)**, ainsi qu'une sortie **(22a)** de gaz pyrolytiques reliée à un brûleur **(22c)** à gaz placé dans l'appareil **(22)** et un brûleur **(9b)** à gaz placé dans le réchauffeur **(9)** du courant régénérateur CO₂.

16. Système, selon la revendication 14, **caractérisé en que** le premier réacteur **(1)** basse pression contient deux chambres - une chambre intérieure **(1c)** et une chambre **(1b)** extérieure et est équipé d'une enveloppe **(1d)** isolée thermiquement à travers laquelle passe un canal **(1a)** d'entrée du mélange de carbone utilisé depuis l'appareil **(25)** préparant le mélange, ayant une entrée CO₂ reliée aux conduites **(10g)** CO₂ connecté aux conduites **(10f)** CO₂ pour traitement et une sortie **(10h)** des gaz, tandis que la chambre **(1c)** intérieure du premier réacteur **(1)** comporte des entrées **(1h)** de gaz primaire provenant de la chambre extérieure et une sortie **(1b)** de gaz brut, et en bas une sortie de mélange de carbone partiellement réagi vers la chambre **(1b)** extérieure équipée également d'une entrée **(1g)** d'hydrogène.

17. Système, selon la revendication 14, **caractérisé en que** le deuxième réacteur **(2)**, ayant la forme d'un four à cuve, est équipé en bas d'un alimentateur **(2a)** d'accepteur de CO₂, et celui-ci, à travers le transporteur **(13)** de l'accepteur, est relié à l'entrée de l'accepteur du troisième réacteur **(3)**, ayant une sortie de l'accepteur CO₂ usé, reliée par le transporteur **(14)** à l'entrée du deuxième réacteur **(2)**, qui est équipé d'au moins une buse **(2b)** de flux de régénérateur CO₂, située au fond et reliée au réchauffeur de flux régénérateur CO₂ **(9)**, en outre le deuxième réacteur **(2)** est équipé en haut d'une sortie **(10a)** de CO₂ reliée à une entrée **(10b)** de CO₂ dans la chaudière **(4)** de récupération.

18. Système, selon les revendications 14 et 17, **caractérisé en ce que** le réchauffeur **(9)** de CO₂ est équipé d'un échangeur **(9a)** thermique qui est relié à l'échangeur **(8)** thermique placé dans le système **(5)** de production d'énergie et est équipé d'un brûleur **(9b)** à gaz relié aux conduites de **(22b)** gaz pyrolytique et à un brûleur **(27a)** à poussière, connecté au transporteur **(28a)** de cendres volantes et/ou au transporteur **(27)** de carbone ou de biocarbone, en outre le réchauffeur **(9)** est équipé d'un échangeur **(30)** thermique relié au système **(33)** de collecteurs solaires au moyen de la sortie **(31)** de caloporteur vers l'échangeur **(33b)** situé au foyer de chaque miroir concave et de l'entrée **(32)** de ce caloporteur, tandis que l'échangeur **(8)** thermique dans le système de production d'énergie est relié à l'entrée à la conduite **(10a)** du flux CO₂ et il est relié à la sortie à l'échangeur **(9a)** thermique dans le réchauffeur, tandis que la sortie **(10)** du flux régénérateur CO₂ du réchauffeur **(9)** est reliée à l'entrée du deuxième réacteur **(2)** - à une buse ou à un système de buses, situées au fond du réacteur, et la sortie de flux CO₂ a une avec le connexion troisième réacteur **(3)**, le système de production d'énergie et de chaleur **(5)** étant raccordé électriquement au réseau **(6)** électrique et une connexion des conduites **(7b)** de chauffage au réseau de chaleur **(7b)**.

19. Système, selon la revendication 14, **caractérisé en ce que** le système **(5)** de production d'électricité, composée d'une pile **(45)** à combustible et d'une centrale de cogénération gaz/vapeur, est reliée à l'échangeur **(8)** collectif, la pile **(45)** à combustible étant équipée d'un échangeur **(8a)** thermique relié par des conduites de chaleur à l'échangeur **(8)**, tandis que la sortie **(7e)** des gaz d'échappement de la pile est reliée par une conduite **(7f)** à la chaudière **(4)** de récupération, la sortie des gaz d'échappement de la chambre **(34)** de combustion du méthane étant reliée à la turbine à gaz **(36)**, et la sortie **(43b)** des gaz d'échappement de la turbine à gaz est reliée à l'échangeur **(8b)** placé dans l'échangeur collectif **(8)** et ensuite à la chaudière **(4)** de récupération qui est reliée au troisième réacteur **(3)** par la conduite **(11a)** de la vapeur technologique et à la turbine **(38)** à vapeur par la conduite **(11b)** de la vapeur énergétique, et en outre une conduite **(10d)** CO₂, avec l'échangeur relié à l'échangeur **(9a)** thermique dans le réchauffeur, passe par l'échangeur (8).

20. Système, selon la revendication 14, **caractérisé en ce que** la chaudière **(4)** de récupération est équipée d'une entrée **(12)** pour l'eau et d'une entrée **(10b)** pour le CO₂ provenant d'un deuxième réacteur **(2)**, reliée par l'échangeur **(4a)** thermique dans la chaudière à la sortie **(10f)** CO₂ pour traitement, y compris par la sortie **(10g)** CO₂ à l'appareil **(25)** ou dans l'atmosphère et/ou à la sortie **(10c)** CO₂ pour séquestration, et en outre l'entrée **(7a)** du caloporteur du processus de refroidissement d'hydrogène, de méthane et des gaz d'échappement de la pile est reliée à la chaudière **(4)** de récupération.

21. Système, selon la revendication 14, **caractérisé en ce que** le troisième réacteur **(3)** est équipé à l'intérieur de tubes **(3a)** contenant un catalyseur au nickel déposé sur un substrat céramique Ni/Al₂O₃, placés dans la première partie du troisième réacteur **(3)**, reliée à l'entrée **(10e)** du flux chaud CO₂, ainsi que de tubes **(3a)** contenant un catalyseur ou Cu-Zn/Al₂O₃ ou un catalyseur Fe/Al₂O₃ et Cu/Al₂O₃ placé dans la deuxième partie du troisième réacteur **(3)**, le troisième réacteur **(3)** ayant l'entrée **(20a)** de biométhane, l'entrée **(11a)** de vapeur technologique et l'entrée **(13)** de l'accepteur de CO₂, ainsi que la sortie **(14)** de carbonates et de calcium et la sortie **(18a)** de biohydrogène.

22. Système, selon la revendication 19, **caractérisé en ce que** le système **(5)** de production d'énergie pour petits objets se compose d'une pile à combustible et/ou d'un cogénérateur.

23. Système, selon la revendication 19, **caractérisé en ce que** les conduites **(20b)** méthane alimentant le système **(5)** de production d'énergie a une connexion **(20c)** soit aux conduites de gaz soit au compresseur de méthane et au réservoir de GNC, soit au liquéfacteur de méthane et au réservoir de GNL.
